Europäisches Patentamt

European Patent Office

Office européen des brevets

(11) Publication number: **0 297 817**
**A1**

## EUROPEAN PATENT APPLICATION

(21) Application number: 88305849.7

(22) Date of filing: 28.06.88

(51) Int. Cl.⁴: **B65G 47/84**

(30) Priority: 02.07.87 US 69704
13.07.87 US 72418

(43) Date of publication of application:
04.01.89 Bulletin 89/01

(84) Designated Contracting States:
AT BE CH DE ES FR GB GR IT LI LU NL SE

(71) Applicant: FECO Engineered Systems, Inc.
5855 Grant Avenue
Cleveland Ohio 44105(US)

(72) Inventor: Deichmann, Helmut
7900 Cresthill Drive
Seven Hills, Ohio 44131(US)
Inventor: Bowler, Peter T.
424 Oaknoll Drive
Amherst Twp., Ohio 44001(US)

(74) Representative: Hallam, Arnold Vincent et al
E.N. Lewis & Taylor 5 The Quadrant
Coventry CV1 2EL Warwickshire(GB)

(54) Container transfer system.

(57) A container transfer system comprising a conveyor (25) equipped with container holding devices (26) for holding containers to the conveyor for conveyance from an input station through one or more processing stations to an output station, a container loading mechanism (24) for automatically transferring containers onto the conveyor, and a container unloading mechanism (30) for automatically transferring containers from the conveyor.

FIG. 1

## CONTAINER TRANSFER SYSTEM

This application is a continuation-in-part of prior application Serial No. 069,704, filed July 2, 1987 and entitled "Rotational Container Holding Device And Conveyor Therefor", which application is hereby incorporated herein by reference.

The present invention generally relates to systems for handling containers and for moving them through various operational steps in an efficient and controlled manner. More particularly, the invention is directed to a container transfer system employing rotational container holding devices of the type disclosed in the above identified U.S. Patent Application. The container transfer system is particularly suited for spray coating operations such as where a glass bottle is provided with a plastic coating to obtain desired decorative finish and strength characteristics while permitting reduction of glass wall thickness.

In U.S. Patent No. 4,625,854, there is disclosed a container transfer system including an in-feed conveyor for deliverying newly formed, uncoated plastic containers in a single file to a handling and conveying system. A transfer conveyor reorients the container from an upright condition to a substantially horizontal condition moving in timed and spaced relationship to a series of container holding devices on a carrier conveyor. The carrier conveyor is positioned adjacent the transfer conveyor and the container holding devices are advanced toward and grip each container at its neck to remove it from the transfer conveyor and then move the containers to subsequent finishing operations. In a typical finishing operation, the moving container holding devices position the containers within a coating chamber, rotate the containers within the coating chamber to assure full and uniform coating of the containers and to provide sufficient rotational movement so that the coating does not sag or drip but is evenly distributed, and thereafter move the containers into and through a curing oven.

In U.S. Patent No. 4,640,406, the carrier conveyor and the container holding devices are described in greater detail. As therein shown, one form of container holding device extends in a generally horizontal orientation from one side of the carrier conveyor and includes an inner housing slidably mounted on a supporting spindle, an outer housing rotatably mounted with respect to the inner housing and slidably mounted with respect to the spindle, and a container gripping member at the outer end of the outer housing for gripping a container by its neck. Two forms of gripping members are disclosed, one for gripping around the outer diameter (exterior) surface of the neck and the other for gripping the inner diameter (interior) surface of a container adjacent its open end. The latter form of gripping member includes a mandrel provided with a plurality of grooves for receiving O-rings for engaging the interior surface of the container for retaining the container on the mandrel. The other form of gripping member includes an open ended collet divided into several segments by slits which segments act together to snap over the container's neck as the collet is telescoped onto the container's neck. A different gripping chuck is used for each size range of bottles. Accordingly, to convert the conveyor to a different bottle size range, each gripping chuck had to be replaced.

The present invention provides a container transfer system comprising a conveyor equipped with container holding devices for holding containers to the conveyor for conveyance from an input station through one or more processing stations to an output station, a container loading mechanism for automatically transferring containers onto the conveyor, and a container unloading mechanism for automatically transferring containers from the conveyor.

A container holding device according to the present invention primarily is intended for use with a chain conveyor. Such container holding device for receiving and securely gripping open-ended containers is characterized by an elongated spindle and a chuck mounted for telescoping movement on the spindle. The chuck includes jaws arranged around the spindle and engageable by a cam on the spindle which controls radial expansion and contraction of the jaws. The jaws support radially outwardly thereof one or more resilient members such as O-rings for applying resilient gripping and friction holding force to the interior surface of the container telescoped over the jaws. For use with an overhead chain conveyor, the container holding device may be attached to a pin depending from the chain. the container holding device may include a housing rotatably mounted on the pin and a sprocket for effecting controlled rotation of the container holding device and hence a container carried thereby during passage through one or more of the processing stations.

The container loading device is located at the input station where containers are being fed into the system such as by conveyors of mass transport type. The loading mechanism times, spaces and loads the containers onto the chain conveyor with the container holding devices located on precise centers. The loading mechanism is driven by the conveyor chain thereby to maintain proper timing. The loading mechanism may be equipped with a bottle stop and timing mechanism which releases containers for loading onto a rotating dead plate of the mechanism without jamming or breaking containers against guide or containment rails.

In an embodiment of loading mechanism according to the invention, containers are fed single file through the bottle stop and timing mechanism. The bottle stop and timing mechanism releases a container for entry onto a rotating dead plate equipped with a circular array of positioning members in the form of V-blocks. The V-blocks properly position the containers for transfer onto pedestals of a main carrousel assembly.

The bottle stop and timing mechanism includes an arrangement of arms and levers for preventing a container from entering onto the rotating dead plate until a V-block is in proper position to receive it. The V-block engages a timing cam which allows a stopper arm to release a container for loading onto the rotating dead plate at the proper time. Provision also is made to interrupt the flow of containers into the loading mechanism when the supply of bottles on the feeding conveyors is insufficient to maintain required feed pressure for smooth loading of containers onto the rotating dead plate. In this manner, jamming or breaking of containers is avoided.

The pedestals in the main carrousel assembly also have adjustable positioning members in the form of V-blocks which are timed with the V-blocks of the rotating dead plate to effect a smooth timed transfer. The pedestal V-blocks are positioned to precisely center containers on the container holding devices of the overhead chain conveyor. As the main loading carrousel rotates, each pedestal and its container rises on a circular cam until the container is transferred onto the chuck of the holding device. The pedestal then drops to a lower position where it again receives another container for transferring.

The container unloading mechanism is located at the output station where containers are to be removed from the chain conveyor and transferred, for example, onto a take-away conveyor of mass transport type. The container unloading device incorporates a cam that pushes the gripping chuck of the container holding devices downwardly to release the container held thereby. The container then is guided in timed adjustable V-type retainers, herein referred to as nests, as it slides down an adjustable ramp onto the take-away conveyor. If a container hangs up on the chuck after the chuck has been urged downwardly to its release position, a bottle cam engages the container to push the container off of the chuck. The unloading mechanism also includes a chuck retaining cam which operates to prevent a hung up container from pulling the chuck off of the spindle of the holding device.

The foregoing and other features of the invention are hereinafter fully described and particularly pointed out in the claims, the following description and the annexed drawings setting forth in detail a certain illustrative embodiment of the invention, this being indicative, however, of but one of the various ways in which the principles of the invention may be employed.

A preferred embodiment of the invention has been chosen for purposes of illustration and is shown in the accompanying drawings. In these drawings, from which various parts have been removed or broken away for illustration purposes,

Fig. 1 is a schematic plan view of a container transfer system including a carrier conveyor;

Fig. 2 is an elevational view of a segment of the carrier conveyor looking along the movement path thereof and showing, partly in section, a container holding device according to the invention;

Fig. 3 is an enlarged portion of Fig. 2 with some parts removed;

Fig. 4 is a sectional view of the container holding device taken along the line 4-4 of Fig. 3;

Fig. 5 is a view showing a container at a position just prior to actuation of the container holding device;

Fig. 6 is a view showing the container holding device actuated to engage and grip the container at its interior surface;

Fig. 7 is a sectional view of a spindle cover attachable to the container holding device to protect the same when not being used to engage and grip a container during operation of the container transfer system;

Fig. 8 is a top plan view, partly broken away, of a container loading mechanism according to the invention;

Fig. 9 is an elevational view, partly broken away, of the container loading mechanism looking generally in the direction of the arrows 9-9 of Fig. 8;

Fig. 10 is a fragmentary vertical sectional view of the container loading mechanism taken substantially along the line 10-10 of Fig. 8;

Fig. 11 is a horizontal sectional view of a portion of the container loading mechanism taken substantially along the line 11-11 of Fig. 10;

Fig. 12 is a sectional view of the container loading mechanism taken substantially along the line 12-12 of Fig. 10, with some parts removed for illustration of an adjustable cam mechanism;

Fig. 13 is an isolated elevational view of the adjustable cam mechanism looking generally in the direction of the arrows 13-13 of Fig. 12;

Fig. 14 is a fragmentary elevational view of a portion of the adjustable cam mechanism looking generally in the direction of the arrows 14-14 of Fig. 12;

Fig. 15 is a top plan view of a container unloading mechanism according to the invention;

Fig. 16 is a side elevational view of the container unloading mechanism looking generally in the direction of the arrows 16-16 of Fig. 15;

Fig. 17 is an end elevational view of the container unloading mechanism looking generally in the direction of the arrows 17-17 of Fig. 16;

Fig. 18 is an end elevational view of an unloading cam assembly included in the container unloading mechanism;

Fig. 19 is a side elevational view of the unloading cam assembly looking generally in the direction of the arrows 19-19 of Fig. 18;

Fig. 20 is an end elevational view of a container ramp assembly included in the container unloading mechanism, looking generally in the direction of the arrows 20-20 of Fig. 16;

Fig. 21 is a top plan view of the lower portion of a bottle stop and timing mechanism according to the invention;

Fig. 22 is a side elevational view of the lower portion of the bottle stop and timing mechanism looking generally in the direction of the arrows 22-22 of Fig. 21;

Fig. 23 is an end elevational view of the upper portion of the bottle stop and timing mechanism looking generally in the direction of the arrows 23-23 of Fig. 21; and

Fig. 24 is a side elevational view of the upper portion of the bottle stop and timing mechanism looking generally in the direction of the arrows 24-24 of Fig. 23.

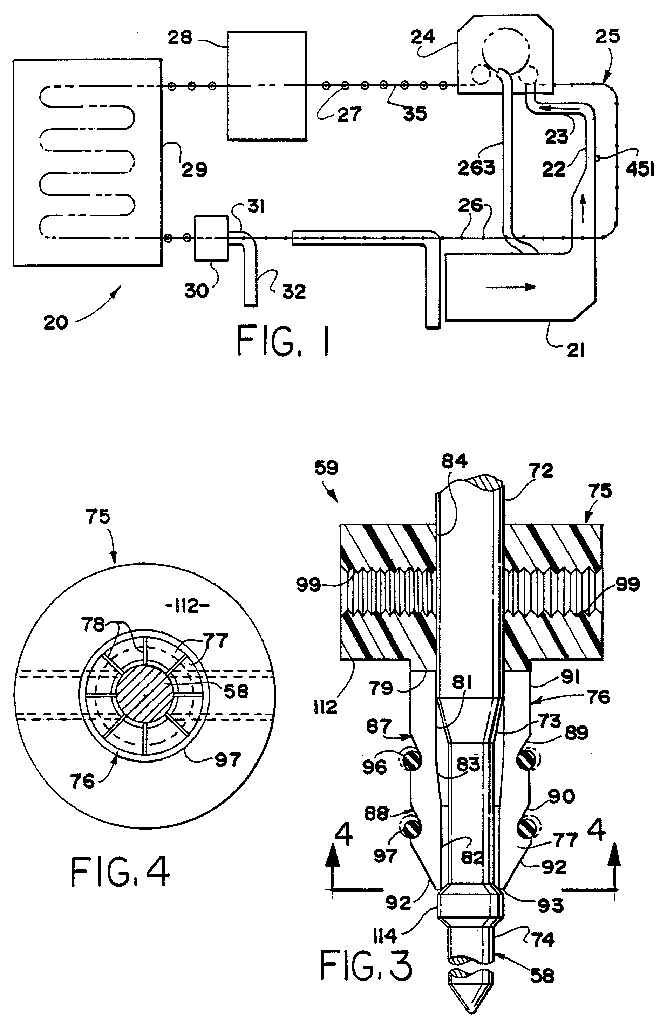

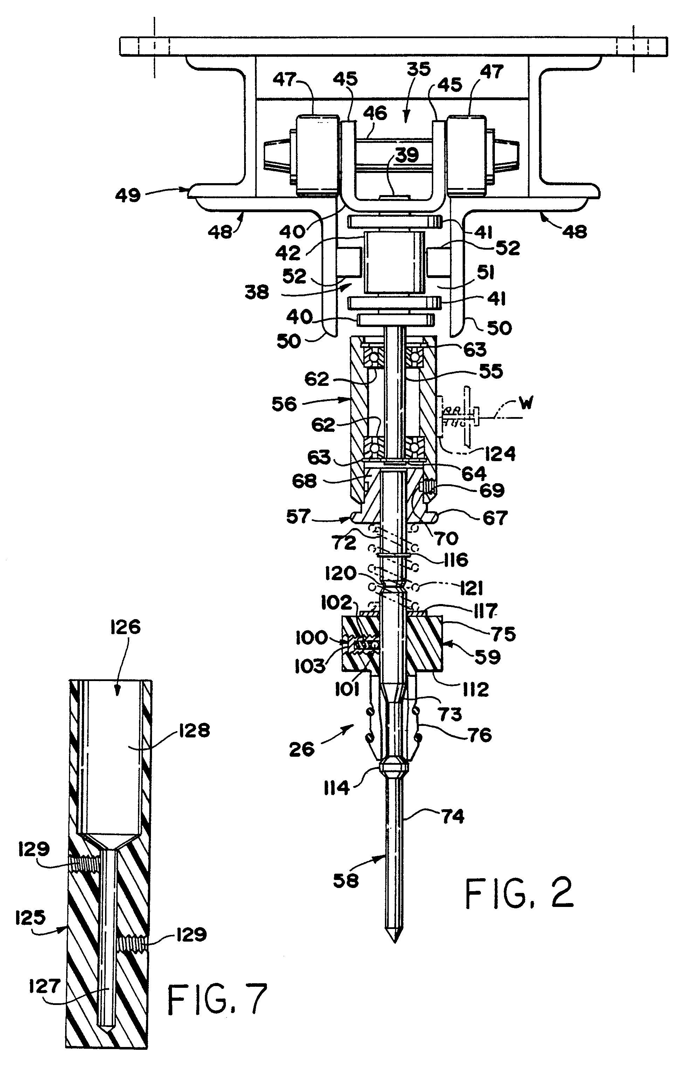

Referring initially to Fig. 1, a container transfer system incorporating the invention is indicated generally by reference numeral 20. The container transfer system 20 includes infeed conveyors 21-23 which may be of mass transport type for single file delivery of containers such as bottles to a loading mechanism 24. The loading mechanism 24 operates to automatically transfer the containers onto an elevated carrier conveyor 25 equipped with container holding devices 26 preferably located on precise centers. The containers are timed, spaced and loaded onto the overhead carrier conveyor 25 which moves the containers in timed and spaced relationship to and through one or more processing stations. For example, the containers, indicated by reference numeral 27, may be moved by the carrier conveyor 25 through a spray booth 28 for applying a coating to the outer surface of the containers, then further through a curing booth or oven 29, other processing stations if desired, and finally to an unloading mechanism 30. The unloading mechanism 30 operates to automatically transfer the containers from the overhead carrier conveyor 25 to outfeed or take-away conveyors 31 and 32 which may be of mass transport type.

The carrier conveyor 25 comprises an endless chain conveyor 35 to which the container holding devices 26 are attached and located on precise centers. In the illustrated system 20, the chain conveyor 35 not only carries and moves the container holding devices 26 horizontally along the path of the carrier conveyor, but it also is used to drive the loading mechanism 24 and unloading mechanism 30 and further to maintain proper timing in the system. The chain conveyor 35, container holding devices 26, loading mechanism 24 and unloading mechanism 30 are hereinafter described in greater detail.

## The Chain Conveyor and Container Holding Devices

In Fig. 2, a section of the chain conveyor 35 is shown in end view. Also shown is a representative one of the container holding devices 26 which are spaced apart, preferably equally, along the length of the chain conveyor. The chain conveyor 35 includes a roller chain 38 comprising, in repetition, a link pin 39 connecting outer links 40 to inner links 41 for articulated movement. Mounted for rotation on the pin 39 between the inner links 41 is a roller 42.

In the illustrated embodiment, the chain conveyor 35 and container holding devices 26 of the carrier conveyor 25 are oriented to hold containers in vertical position during horizontal translating movement thereof along the path of the carrier conveyor. More particularly, the link pins 39 of the roller chain 38 are oriented vertically for relative pivoting movement of the links 40, 41 about vertical axes.

At spaced intervals along the length of the chain conveyor 35, the upper one of paired outer links 40 is provided with upright legs 45 through which an axle 46 passes. Mounted to the ends of the axle 46 outwardly of the legs 45 are respective carrier rollers 47 which ride on respective runner rails 48 of a fabricated conveyor track assembly 49. The runner rails 48 include respective depending flanges 50 in spaced apart parallel relationship. The flanges 50 define therebetween a channel 51 through which the roller chain 38 moves. Transverse alignment of the roller chain is maintained by guide blocks 52 attached to the depending flanges 50 of the runner rails. The guide blocks 52 project inwardly and define therebetween a containment space for guided passage therebetween of the link pin rollers 42. At each mounting location for a container holding device 26, the roller chain 38 has secured thereto a depending attachment pin 55.

The container holding device 26 generally includes a spindle housing 56 mounted for rotation on the attachment pin 55, a spindle sprocket 57 secured to the spindle housing 56, a shaft or spindle 58 secured at its upper end to the spindle sprocket 57, and a container gripping chuck 59 mounted for telescoping sliding movement on the spindle 58. The spindle housing 56 has a tubular body concentric with and rotatably mounted on the attachment pin 55 by vertically spaced apart ball bearings 62. The upper and lower ends of the spindle housing are counterbored to receive the bearings 62 and the bearings are held against the inner shoulders (bottoms) of the counterbores by retaining rings 63. The assembly of the spindle housing and bearings is vertically supported on the attachment pin 55 by retaining ring 64.

The spindle sprocket 57 has a lower sprocket portion 67 and an upper reduced diameter tubular portion 68. The upper tubular portion 68 is fitted in the lower counterbore of spindle housing 56 and is retained therein by one or more set screws (not shown) screwed into respective threaded bores 69. Preferably the upper tubular portion 68 is provided with an annular groove or recess(es) 70 to receive the inner end of each or respective set screw(s) to provide interference against relative movement between the spindle sprocket from the spindle housing.

The spindle 58, which is coaxial with the spindle sprocket 57 and spindle housing 56, has its upper end secured in suitable manner to the spindle sprocket for rotation therewith. For example, the spindle may be welded to the spindle sprocket or, more preferably, the spindle sprocket may be shrink fitted on the spindle. Going from top to bottom in Fig. 2, the spindle 58 has a cylindrical upper portion 72, a short tapered cam portion 73 and a reduced diameter lower end portion 74.

With additional reference to Figs. 3 and 4, the gripping chuck 59 has a generally tubular main body 75 from which a collet 76 depends. The collet 76 is generally cylindrical with the cylindrical wall thereof being divided into several, preferably eight, axially elongate jaws or fingers 77 by means of slits 78 extending from the open end of the collet to a point 79 preferably short of the main body 75 of the chuck. The chuck or at least the collet 76 is formed of a suitable resilient material whereby the finger-like jaws 77 are resiliently radially deflectable in a cantilever-like fashion for radial expansion and contraction of the collet. The chuck preferably is formed as a single integral piece from a suitable UHMW plastic.

As best seen in Fig. 3, the inner surface of each jaw or finger 77 has an upper portion 81, a lower portion 82 radially inwardly offset from the upper portion, and an intermediate portion 83 sloping radially outwardly and upwardly from the lower portion 82 to the upper portion 81. In the relatively unflexed condition of the fingers seen in Fig. 3, the upper inner surface portions 81 of the fingers define a circle equal in diameter to a center bore 84 through the main body 75. The center bore 84 is sized to slide closely on the upper portion 72 of the spindle 58. The lower inner surface portions 82 of the fingers in their relatively unflexed condition seen in Fig. 3 define a circle with a diameter less than the diameter of the upper portioon 81 of the spindle. The intermediate inner surface portion 83 of each finger, which is sloped with respect to the longitudinal axis of the collet, may have a taper corresponding generally to that of the cam surface 73 on the spindle. In the illustrated preferred embodiment, the sloped intermediate surface 83 of each finger is located approximately midway along the length of the fingers and generally in the region of a pair of annular grooves 87 and 88 provided on the outer diameter surface of the collet.

The annular grooves 87 and 88 are formed by respective sets of circumferentially arranged recesses 89 and 90 in the radially outer surfaces of the collet fingers 77. The two sets of circumferentially arranged recesses, i.e., the two annular grooves on the outer diameter surface of the collet, are axially spaced apart. The recesses 89 and 90 in each finger are located in a generally straight outer surface portion 91 normally extending parallel to the axis of the spindle 58 when the chuck 59 is radially contracted as seen in Fig. 3. The straight outer surface portion 91 terminates below the lower recess 90 at a sloped outer surface portion 92 extending to the forward end face 93 of the finger. The sloped surfaces 92 at the lower ends of the fingers provide the collet with a tapered leading end for facilitating insertion of the collet into the open end of a bottle or other container with which the chuck is being used to grip and hold.

the annular grooves 87 and 88 retain therein respective resilient gripping elements 96 and 97 which preferably are circumferentially continuous and circumscribe the fingers 77. The gripping elements 96 and 97 may be convention O-rings and a preferred O-ring is made of neoprene having substantially greater resiliency than the material of the fingers and having suitable friction characteristics for gripping the interior surface of a glass bottle, i.e., having a relatively high coefficient of friction with respect to the interior surface of the container for positive frictional gripping of the container. More particularly, the resilient gripping elements 96 and 97 enable the container to be held on the collet against downward axial slippage without the fingers having to urge the gripping elements 96 and 97 under high radial expansion forces against the interior surface of the container.

In the illustrated embodiment, the upper groove 87 and O-ring 96 are located generally at the upper end of the sloped intermediate inner surfaces 83 of the fingers 77 and the lower groove 88 and O-ring 97 are generally located at an elevation just below the sloped intermediate inner surfaces of the fingers and in the region of the lower inner surfaces 82 of the fingers. The recesses 89, 90 in the radially outer surfaces of the fingers preferably are relatively sharply inset at their lower ends for securely retaining the O-ring 96, 97 within the groove against downward forces acting on the O-ring when gripping and supporting a container. The upper end of each recess may be sloped to facilitate assembly of the O-rings onto the collet. The O-rings may be easily rolled upwardly along the sloped upper surface portions of the recesses and out of the grooves onto the straight outer surface portions 91 for easier grasping during, for example, removal of the O-rings and replacement with different size O-rings. The recesses, in particular, may have the illustrated inverted semi-heart or semi-teardrop shape.

The tubular main body 75 of the chuck 59 is mounted at center bore 84 for sliding telescoping movement on the upper portion 72 of the spindle 58. Extending radially from the center bore 84 are one or more threaded bores 99. As seen in Fig. 2, a ball detent device 100 is threaded into each bore 99. The ball detent device includes a ball 101 urged radially inwardly by a spring 102 housed within a center bore on set screw 103. During telescoping (axial) movement of the chuck 75 along the spindle 58, the ball of each detent device will ride along the outer surface of the spindle.

As seen in Figs. 2-4, the main body 75 has a transverse dimension greater than the collet 76 for forming at its bottom an abutment surface 112. The abutment surface 112 is located at the upper end of the collet and extends radially outwardly of the collet fingers 77. As is preferred, the main body may be generally cylindrical and of a diameter greater than the generally cylindrical collet thereby forming the annular abutment or shoulder surface 112 at the upper end of the collet.

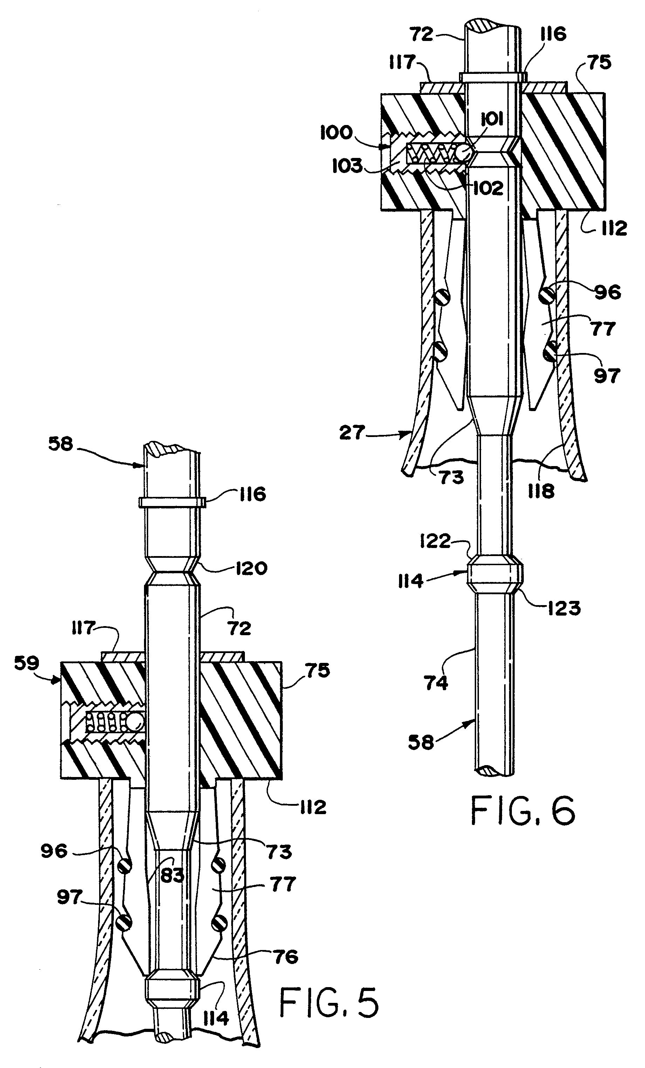

Referring now to Figs. 5 and 6, upper and lower positions and the operation of the container holding device 26 are illustrated. In Fig. 6, and also in Figs. 2 and 3, the gripping chuck 59 is shown in its lower position. In its lower position, the chuck may be located at or supported atop a retention stop 114 provided on the lower section 74 of the spindle 58. the stop 114 is formed by an annular band or bead surrounding the lower spindle section and which may be integral therewith. The band 114 operates to limit or restrict downward axial movement of the chuck. When the chuck is in its lower position, the collet 76 is radially contracted or collapsed as shown.

In normal operation of the container holding device 26, a container such as bottle 27 is telescoped at its open end over the spindle 58 and the collet 76 to engagement with the abutment surface 112 at the bottom of the chuck body 75 as seen in Fig. 5. As will be appreciated, the bottle may be pushed onto the spindle, the spindle pushed into the bottle, or both the bottle and spindle moved towards each other to obtain relative movement for placement of the bottle on the holding device. Also, such relative movement may be effected either manually or mechanically with the bottle typically being pushed manually or mechanically onto the holding device for carriage by the conveyor chain. A preferred loading mechanism, with means for automatically raising bottles to engagement with the holding devices in timed relationship to the chain conveyor 35, is hereinafter described.

As the bottle is further telescoped over the spindle from its Fig. 5 position, it urges the chuck 59 telescopically along the spindle and to engagement with a stop 116 secured to the upper portion 72 of the spindle as seen in Fig. 6. The illustrated stop 116 is a snap ring retained in a groove in the spindle. There also may be provided atop the chuck body a flat washer 117 for engaging the snap ring 116 to minimize wear on the plastic chuck body 75.

As the chuck 59 is thusly raised from its lower position in Fig. 5 to its upper position in Fig. 6, the sloped intermediate inner (cam follower) surfaces 83 of the collet fingers 77 will move to engagement with the tapered cam portion 73 of the spindle whereupon the collet fingers will be flexed radially outwardly. In this manner the collet is radially expanded to radially outwardly urge or expand at least one of the O-rings 96, 97 encircling the collet fingers to gripping engagement with the inner surface 118 of the bottle thereby to hold the bottle to the container holding device. Preferably two or more O-rings are provided for gripping the bottle, as illustrated, to ensure adequate holding force should one of the rings enter an irregularity in the interior surface 118 preventing proper engagement and reducing the amount of holding force obtained by such ring. The chuck also operates to close off the open end of the bottle primarily by engagement of the top end of the bottle against the abutment surface 112 and secondarily by the sealing afforded by the O-rings 96 and 97 against the inner diameter surface 118 of the bottle.

After the bottle 27 has been telescoped axially over the spindle 58 sufficiently to raise the chuck 59 to its upper position in Fig. 6, the chuck will be releasably held in this upper position by the detent device 100 coacting with a V-groove 120 provided on the spindle. The chuck will be retained in its upper position until urged downwardly with sufficient enduring force overcoming the retaining force of the detent device and any frictional resistance to sliding movement of the chuck along the spindle towards its lower position. During this downward urging of the chuck, the collet will be controllably radially contracted to its smaller diameter releasing the bottle and allowing the bottle to separate from the chuck, as by dropping from the chuck, and more generally the container holding device. It will be appreciated that removal may be effected, if desired, by pullung or pushing axially downwardly on the bottle. The chuck gripping the bottle will be pulled down with the bottle until the collet contracts sufficiently to release the bottle therefrom. A preferred unloader mechanism, with means for automatically actuating the chuck to release the bottle, is hereinafter described.

If desired, a spring may be provided to return the chuck to its proper empty chuck position seen in Fig. 5. For example, a coil spring may be interposed between the sprocket 57 and the chuck 59 as indicated in broken lines at 121 in Fig. 2. Such spring 121 should be strong enough to position the empty chuck but not strong enough to position a chuck loaded with a container as the latter might cause the container to be released at the wrong time or location.

The illustrated chuck 59 may be easily and quickly adapted for gripping containers having different inner diameters adjacent their open ends. This adaptation can be effected by replacing one or more of the O-rings 96 and 97 with O-rings having generally the same diameter but different ring thicknesses (cross-sectional diameters), as is illustrated in broken lines in Fig. 3.

Different sizes and shapes of containers may also be accommodated by replacing the chuck 59 with a different size or shaped chuck. This may be accomplished without the need for any tools by simply axially pulling the chuck downwardly over the stop 114 on the lower spindle section 74. The stop 114 has an outer diameter equal or less than the diameter of the bore 84 through the chuck body 75 to permit axial passage of the body thereover. Also, the collet fingers 77 will flex outwardly to clear the stop as they are axially moved thereover. Preferably the stop 114 has a sloped or chamfered upper surface 122 to facilitate removal of the chuck and a sloped or chamfered bottom surface 123 to facilitate assembly of another chuck onto the spindle. Again, this replacement of one size chuck with a chuck of a different size may be easily and quickly accomplished without the use of tools. This is paticularly important considering that a typical container transfer system for processing bottles or other containers may include, for example, thousands of container holding devices including chucks that would have to be replaced between runs for different sizes and/or shapes of containers.

It also will be observed that by virtue of the chuck 59 engaging the interior surface of the container 27, the entire outer surface of the container is available for reception of a coating or other treatment. If the coating is sprayed onto the bottle, the abutment of the top of the bottle against the annular abutment surface 112 precludes or substantially prevents passage of the spray into the interior of the bottle which may be undesirable. As will also be appreciated, the bottle held by the chuck may be rotated by rotation of the sprocket 57 to which the spindle 58 is secured. This rotation may be effected by movement of the container holding device relative to a chain or the like engaging the sprocket. As a result of the relative movement, the sprocket will be rotated thereby to rotate the chuck and hence the bottle as may be particularly desirable during sprayed application of a coating onto the bottle.

Further in accordance with the invention, the spindle 58 extending into the container may be of suitable length and utilized as an electrode for an electrostatic painting process or the like. A desired potential, such as a ground potential, may be applied to the spindle in any suitable manner, such as by a spring-loaded wiper bar shown in broken lines at 124 in Fig. 2. The wiper bar 124 may be located in an electrostatic spray booth adjacent the path of the holding devices of the conveyor. The wiper bar may be vertically positioned to engage the outer diameter surface of the spindle housing 56 of each holder during the time that an electrostatic spray coating is being applied to the container carried by the holder. The spindle housing 56 and spindle 58 are both formed of electrically conductive material and electrically connected by spindle sprocket 57 whereby the spindle will be brought to desired potential by the wiper bar 124 which is connected to a source of potential by wire lead W. The spindle may thusly be maintained at ground potential to draw positively charge coating material to the container surrounding the spindle.

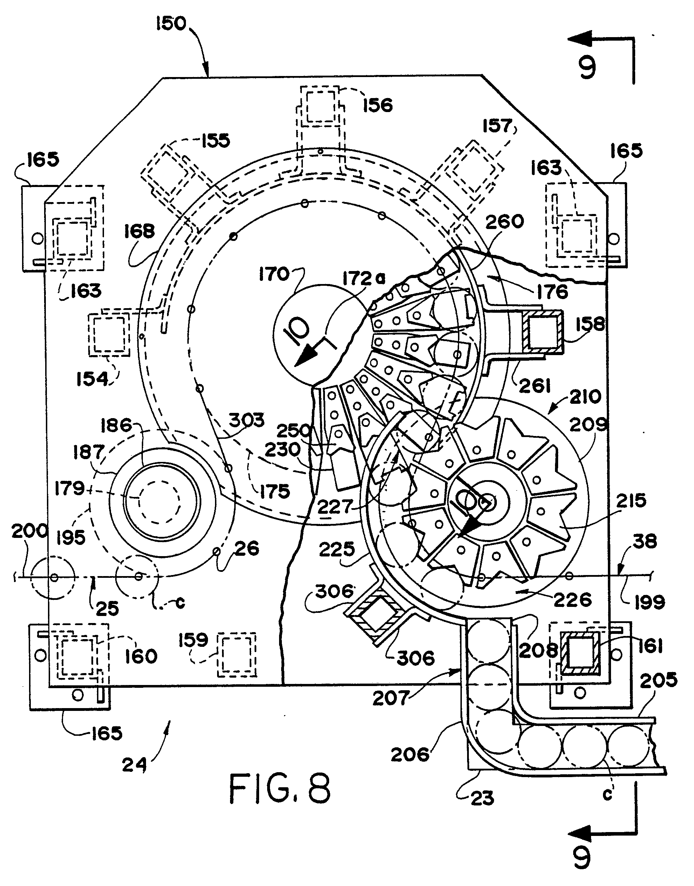

Referring now to Fig. 7, one or more of the container holding devices of the conveyor which are not intended to receive a container may have slipped over the lower portion thereof a cover 125 to avoid involvement with finishing operations such as coating since the lower portion will not be covered by a container. The cover 125 has a stepped diameter, axially extending cavity 126. The lower, smaller diameter portion 127 of the cavity is sized to accommodate the lower spindle portion 74. The upper, larger diameter portion 128 is sized to be telescoped over the collet 76 and butted against the shoulder surface 112 to prevent coatings or the like from fouling the chuck. Nylon set screws (not shown) may be threaded into bores 129 to engage the spindle and thereby hold the cover on the spindle independently of the chuck.

The Container Loading Mechanism

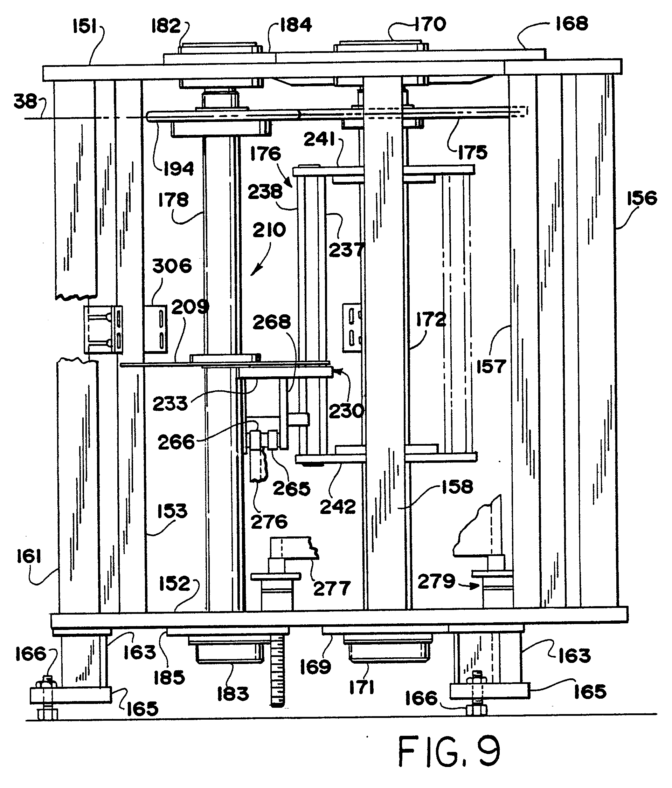

Referring now to Figs. 8 and 9, the container loading mechanism 24 for transferring containers from the outlet of the infeed conveyors 21-23 to the holding devices 26 of the carrier conveyor 25 comprises a fabricated frame 150 including a top plate 151 and a bottom plate 152 which are interconnected by a plurality of upright tubular columns 153-161. The bottom plate 152 has secured to the underside thereof four short legs 163 for supporting the frame on the floor 164 with clearance between the bottom plate 152 and the floor 164. The legs 163 are generally located at respective corners of the bottom plate and are provided at their lower ends with pads 165 which may be bolted or otherwise secured to the floor 164. If desired, the pads 165 may be outfitted with and supported on the floor by height adjusters such as bolts 166 for leveling the loading mechanism.

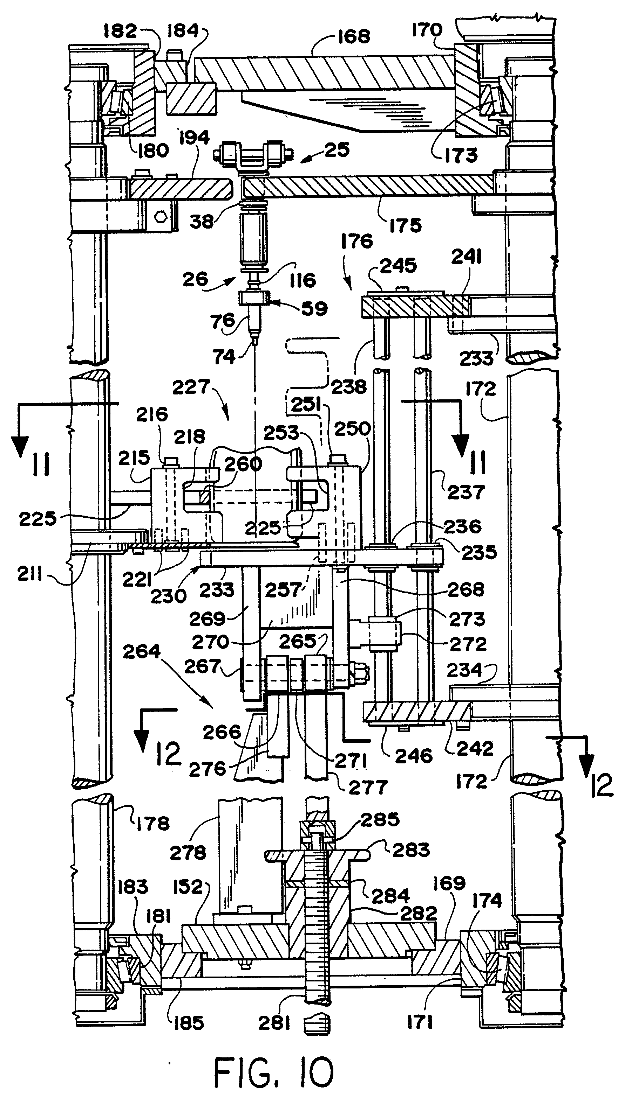

The top and bottom frame plates 151 and 152 have fastened thereto the flange plates 168 and 169 of upper and lower bearing housings 170 and 171, respectively. As best seen in Fig. 10, a vertical main shaft 172 is journaled within vertically aligned bearings 173 and 174 respectively retained in the upper and lower housings 170 and 171. The main shaft 172 has secured thereto a sprocket 175 over which the conveyor chain 38 of the carrier conveyor 25 is trained for rotating the main shaft 172 in proper timed relationship with respect to the conveyor chain and, more particularly, the container holding devices 26 carried by the conveyor chain. The main shaft 172 also supports for rotation therewith a main or loading carousel generally indicated at 176. The loading carousel 176 is hereinafter described in greater detail.

The loading mechanism 24 also comprises two other vertical shafts 178 and 179 which are journaled between the top and bottom plates 151 and 152 in a manner similar to the main shaft 172. More particularly and as seen in Fig. 10, the vertical shaft 178, herein referred to as an infeed or input shaft, is journaled within vertically aligned bearings 180 and 181 retained in upper and lower bearing housings 182 and 183 which are mounted by flange plates 184 and 185 to the top and bottom plates 151 and 152, respectively. The vertical shaft 179, herein referred to as the output shaft, is similarly mounted, but only the upper bearing housing therefor and its flange plate can be seen in Fig. 8 at 186 and 187, respectively.z

The input and output shafts 178 and 179 have secured thereto respective sprockets 194 and 195. The sprockets 194 and 195 are located at the same vertical height as the main shaft sprocket 175 which is located in the upper region of the frame 150. The conveyor chain 38 is trained over the sprockets 175, 194 and 195 such that the chain passes around the sprocket 194 in a clockwise direction, then the sprocket 175 in a counterclockwise direction, and then the sprocket 195 in a clockwise direction, as viewed in Fig. 8.

In the illustrated preferred embodiment, the input shaft sprocket 194 and output shaft sprocket 195 are equal in diameter and number of teeth, and the centers of the input shaft 178 and output shaft 179 are equal spaced from the center 172a of the main shaft 172 and define with the center of the main shaft an included angle of about 45°. Also, the path of the conveyor chain 38 entering the loading mechanism at 199 is aligned with the path of the chain exiting the loading mechanism at 200.

The remaining components of the loading mechanism 24 will now be described in relation to the path of containers C through the loading mechanism. As seen in Fig. 8, the containers are guided by side rails 205 and 206 which form a chute 207. The containers are fed single file through the chute 207 by the infeed conveyors 21-23 (Fig. 1). In Fig. 8, the end of conveyor 23 terminates at a right angularly disposed, stationary dead plate 208 over which the containers are fed single file onto a rotating dead plate 209 of an input carousel 210. As seen in Figs. 9 and 10, the rotating dead plate 209 is mounted to a collar 211 on the input shaft 178. The dead plate 209 is concentric with and rotated by the input shaft 178 which is driven by the conveyor chain trained over sprocket 194 as above indicated. As seen in Fig. 8, the chute 207 at its exit end turns at right angles to the conveyor 23 and guides the containers onto the rotating dead plate generally radially with respect to the rotational axis of the dead plate 209.

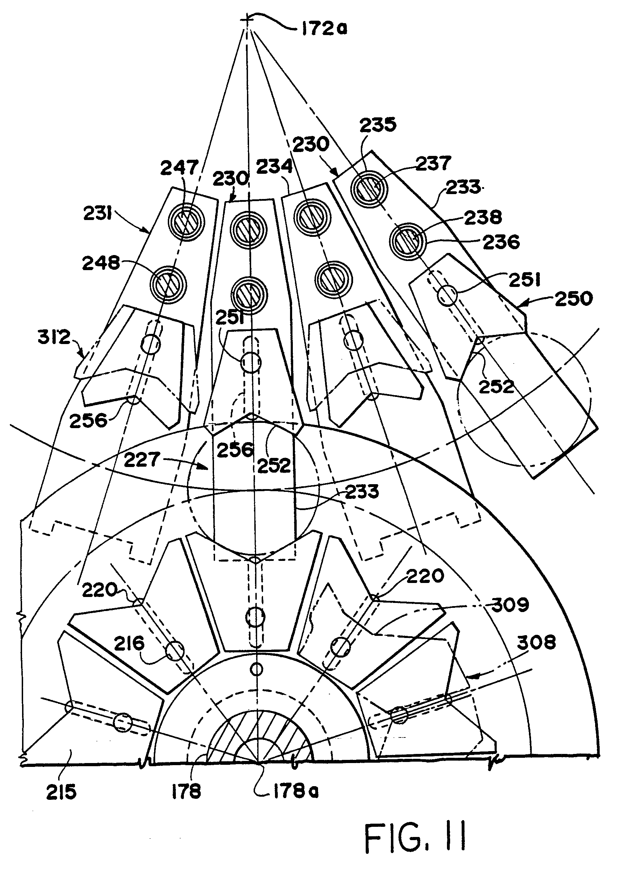

As seen in Figs. 8, 10 and 11, positioning members 215 are mounted to the rotating dead plate 209 by bolts 216. In the illustrated preferred embodiment, the positioning elements are circumferentially equally spaced arund the rotational axis of the dead plate 209, i.e., the axis 178a of the input shaft 178. As seen in Fig. 8, there are ten such positioning members having their centers annularly (circumferentially) spaced at 36° increments. Each positioning member generally is in the form of a block generally having in plan view a trapezoidal shape as seen in Figs. 8 and 11. The larger, radially outer end of each positioning member of block 215 has formed therein a radially outwardly opening notch 217 of shallow V-shape, whereupon the illustrated preferred positioning member may be referred to as a V-block. Each V-block also is provided with a horizontal groove 218 in the radially outer end thereof as seen in Fig. 10.

As seen in Fig. 11, the rotating dead plate 209 at each V-block position has a radially elongated slot 220 therein through which the fastening bolt 216 passes to permit radial adjustment of the V-block 215 for different size bottles. The slot 220 also receives the lower ends of dowel pins 221 depending from the V-block as seen in Fig. 10. The dowel pins 221 engage the sides of the slot 220 to prevent turning of the V-block around the single bolt 216 thereby to hold the V-block in desired radial orientation on the rotating dead plate 209. When properly adjusted radially for any given size container the notches 217 of the V-blocks 215 are radially inwardly spaced from the outer perimeter of the rotating dead plate 209 to provide an annular shelf onto which the containers are fed from the chute 207.

As the containers are fed onto the shelf area of the rotating dead plate 209, they are sequentially received in the notch 219 of respective V-blocks 215 and rotatably carried by the dead plate in a clockwise direction looking at Fig. 8. During such clockwise circumferential movement of the containers, arcuate guide(s) or containment rail(s) 225 concentric with the rotating dead plate keeps the containers on the rotating dead plate. The containment rail 225 also holds the containers seated in the notch 217 of the respective V-blocks 215 properly to space the containers. That is, the containment rail 225 cooperates with the V-blocks precisely to position the containers being rotatably carried on the rotating dead plate from an entry zone 226 at the end of the chute 207 through approximately 135° to a transfer zone 227. At the transfer zone the containers are transferred from the input carrousel 210 to the loading carrousel 176.

With continued reference to Figs. 8-11, the loading carrousel 176 includes a plurality of shelves or pedestals 230 circumferentially equally spaced around the rotational axis of the loading carrousel, i.e., the axis 172a of the main shaft 172. In the illustrated preferred embodiment, there are ten pedestals 230 having their centers circumferentially spaced at 36° increments. The loading carrousel also includes another set of wider pedestals 231 which are circumferentially equally spaced around the main shaft with the wider pedestals 231 alternating with the narrower pedestals 230. Accordingly there are ten wider pedestals 231 circumferentially spaced at 36° increments. The pedestals 231 are wider than the pedestals 230 for use with larger diameter containers in the below discussed manner.

The pedestals 230 each include a flat, elongated plate 233 mounted for extension radially with respect to the main shaft 172. At their radially inner ends the generally parallel sides of the plates 233 taper towards each other generally in a radial direction for close fitting with similarly tapered radially inner ends of the plates 234 of the wider pedestals 231, the plates 233 and 234 thereby being arranged in a circular array extending around the main shaft, for minimizing the overall size of the loading carrousel 176. In the region of their tapered ends, each pedestal plate 233 has a pair of radially spaced apart bores in which bushings 235 and 236 are fitted. Respective guide rods 237 and 238 extend through these bushings 235 and 236 and support or mount the pedestal 230 for vertical movement. The guide rods also laterally support the pedestal to maintain radial extension of the pedestal plate 233 relative to the main shaft 172.

The guide rods 237 and 238 for each pedestal 230 are secured top and bottom between upper and lower annular plates 241 and 242 which are attached to respective collars 243 and 244 on the main shaft 172. As seen in Fig. 10, the rods extend into bores in the annular plates and are retained in the bores by retainer plates 245 and 246 secured to the annular plates, the upper retainer plate 245 spanning the top ends of the bores in the upper annular plate 241 and the lower retainer plate 246 spanning the bottom ends of the bores in the lower annular plate 242. In like manner, a pair of guide rods 247 and 248 are provided for each wider pedestal 231. Accordingly, the pairs of guide rods 237, 238 and 247, 248 are spaced around the main shaft 172 at 18° increments, this coinciding with the angular spacing between the centers of each narrow pedestal 230 and adjacent wider pedestal 231.

Each pedestal 230, 231 has mounted thereon a positioning member 250 by bolt 251. Each positioning member 250 generally is in the form of a block generally having in plan view a trapezoidal shape as seen in Figs. 8 and 11. The larger, radially outer end of each positioning member or block 250 has formed therein a radially outwardly opening notch 252 of shallow V-shape, this being similar to the V-blocks 215 on the rotating dead plate 209, whereupon the illustrated positioning members 250 may also be referred to as V-blocks. Each V-block 250 also is provided with a horizontal groove 253 in its radially outer end to provide, during rotation of the loading carrousel and resultant circumferential movement of the pedestals along an annular path, clearance with the end of the containment rail 225 extending into the transfer zone 227. As seen in Fig. 10, the containment rail 225 may be located at an elevation within the vertical height of the V-blocks 250 and generally in vertical alignment with the vertex of the V-shape notch 252.

As seen in Fig. 11, each pedestal 230, 231 has a radially elongated slot 256 therein through which the bolt 250 passes to permit radial adjustment of the V-block 250 for different diameter containers. The slot 256 also receives the lower ends of dowel pins 257 depending from the V-block as seen in Fig. 10. The dowel pins engage the sides of the slot to prevent turning of the V-block 250 around the single bolt 251 which holds the V-block in desired radial position on the pedestal.

The loading carrousel 176 is rotated in timed relation to the input carrousel 210 for smooth timed transfer of containers from the rotating dead plate 209 to respective pedestals 230, 231 of the loading carrousel. In the illustrated embodiment, the main shaft sprocket has twice as many teeth as the input shaft sprocket. Accordingly, the input carrousel rotates at twice the angular speed of the loading carrousel. Even though the input carrousel is rotating twice as fast as the loading carrousel, the V-blocks 215 and 250 are always directly across from each other at the transfer point. Consequently, the containers as they are moved into the transfer zone 227 will be positioned between a V-block 215 on the rotating dead plate 209 and an opposed V-block 250 on a pedestal 230, 231. The V-blocks 215 and 250 are radially adjusted to the diameter of the container for precise positioning of the container therebetween during transfer.

As seen in Fig. 8. the containment rail 225 extends sufficiently into the transfer zone 227 to keep each container nested in the V-blocks 215 of the input carrousel 210 until such time that the container is captured between opposed V-blocks 215 and 250 of the two carrousels 210 and 176. As the opposed V-blocks 215 and 250 rotate through the transfer zone and advance the container from the constraint of containment rail 225, the container will be engaged by arcuate guide(s) or containment rail(s) 260 which is concentric with the loading carrousel 176. Then, as the opposed V-blocks 215 and 250 separate while they rotate out of the transfer zone, the containment rail 260 will hold the container seated in the notch 252 of the V-block 250. The containment rail 260 may consist of plural arcuate segments mounted by brackets 261 to uprights 154-158 with their adjacent ends overlapping.

Once the container is captured between the containment rail 260 and V-block 250, the container will be caused to slide off of the rotating dead plate 209 and onto the radially outer end of pedestal plate 233, 234 passing slightly underneath the rotating dead plate as seen in Figs. 9 and 10. Once transferred onto the pedestal 230, 231, the container will be rotatably carried by the pedestal around the axis 172a of the main shaft 172 with the V-block 250 on the pedestal and containment rail 260 cooperating to position precisely such container with respect to other containers already transferred onto the loading carrousel for smooth transfer and loading of the containers onto the container holding devices 26 of the carrier conveyor 25 in the below described manner.

As the loading carrousel 176 rotates, being driven by the conveyor chain 38, each pedestal 230, 231 is raised and the container supported thereon is moved upwardly to engagement with and pushed onto a respective container holding device 26 carried by the conveyor chain 38. As above indicated, the conveyor chain is trained over the main shaft sprocket 175 to rotate the loading carrousel in timed relation to linear movement of the conveyor chain along the arcuate path determined by the sprocket 175. The sprocket 175 is concentric with the main shaft 172 and hence with the circumferential path of the pedestals 230, 231. As seen in Figs. 8 and 10. the V-blocks 250 and containment rail or rail segments 260 are adjusted to align the centers of the containers vertically beneath the centers of respective container holding devices 26 carried by the conveyor chain 38, especially at the point when the container starts to telescope over the container holding device (before and after this point, some play can be tolerated). As a result, the arcuate path of the container holding devices is coextensive with a portion of the circumferential path of the pedestals and within this region the containers sequentially are raised by the pedestals and pushed onto the container holding devices for subsequent transfer out of the loading mechanism by the carrier chain.

After the pedestal pushes the container thereon onto the holding device aligned therewith, the pedestal drops rapidly to a lower position to clear the V-block 250 thereon with respect to the container then carried by the holding device and conveyor chain. The pedestal also is thusly returned to its original height for passage of the plate 233, 234 just beneath the rotating dead plate 209 as the pedestal moves to receive a new container. As shown in Fig. 1, there is a bottle return conveyor 263 running from the loader 24 back to the bottle feed conveyor 21. A dead plate is mounted on the feed end of this conveyor 263 and butts up to the lowered pedestals of the loading carrousel. If a container fails to be loaded onto the main conveyor holding chuck, the container will ride the pedestal back down to the dwell cam level and be unloaded by use of an arcuate guide rail to pull the container out of the V of the pedestal V-block, across the dead plate and onto the bottle return conveyor 263.

In the illustrated preferred embodiment, a circular cam mechanism 264 is employed to control raising and lowering of the pedestals 230, 231. As seen in Figs. 9 and 10, the circular cam mechanism includes a pair of cam follower rollers 265 and 266 supported on axle bolt 267 for rotation. The axle is mounted between the lower ends of leg plates 268 and 269 depending from pedestal plate 233 (234). The leg plates are parallel and may be braced at their upper ends by radially extending plate 270. The axle extends horizontally and radially between the leg plates with the cam follower rollers located between the leg plates and radially spaced apart by a spacer ring 271. Also provided is an arm 272 extending radially inwardly from leg plate 268 and having a bushing 273 which slides on the radially outer guide rod 238 to assist in keeping the pedestal plate 233 horizontal. Although not shown, there may be provided another arm plate attached to the outer leg plate 269 against its inner surface for extension to engagement with the leading edge of the outer leg plate of the next trailing pedestal. This serves to maintain proper uniform spacing at the outer ends of the pedestals and to facilitate in general movement of the pedestals and related structure around the axis of the main shaft 172. Preferably the end of this arm is provided with bearing material to prevent wear as it slides vertically along the leading vertical edge of the outer leg plate of the next trailing pedestal.

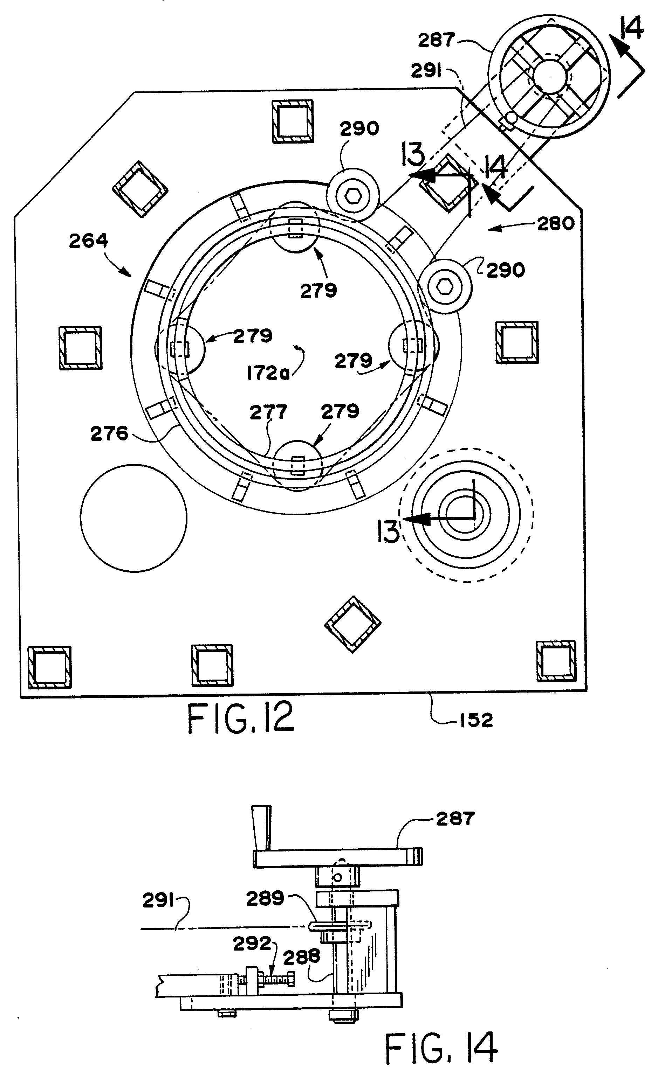

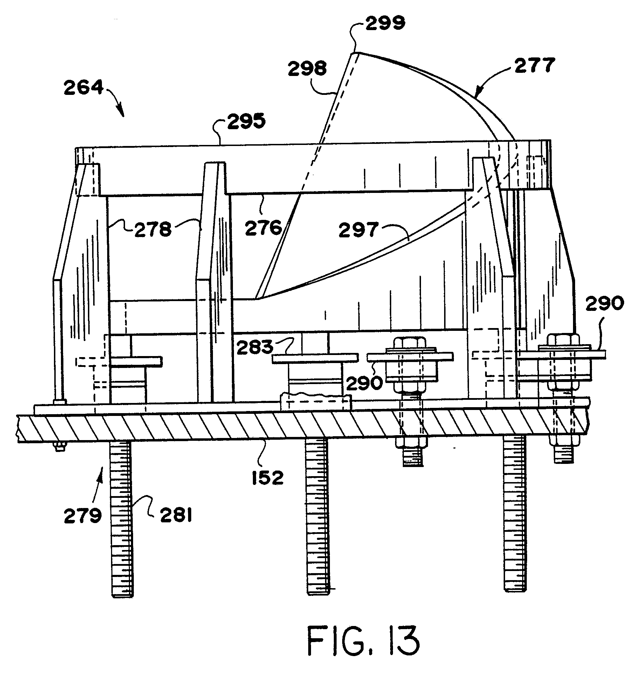

The cam follower rollers 266 and 265 respectively are vertically aligned with a circular dwell cam 276 and a circular lift or elevator cam 277. The dwell cam 276 is in the form of a horizontally disposed, circular ring supported by brackets 278 above the bottom frame plate 152. As seen in Figs. 12 and 13, the dwell cam 276 is concentric with the axis 172a of the main shaft as is the lift cam 277. The lift cam 277 is located radially inwardly of the dwell cam 276 and is supported for vertical adjustment by jacks 279 of lift cam adjustment mechanism 280, the illustrated embodiment employing four such jacks as seen in Fig. 12.

As best seen in Fig. 10, each jack 279 includes a jack screw 281 which supports the lift cam 277 and which is guided for vertical movement in a guide block 282 mounted to the bottom plate 152. Threaded on the jack screw 281 is a sprocket 283 which is supported by bushing 284 atop the guide block 282. The screw 281 is pinned at 285 to the lift cam 277 to prevent rotation thereof with the sprocket 283. Accordingly, rotation of the sprocket in opposite directions respectively will raise and lower the lift cam.

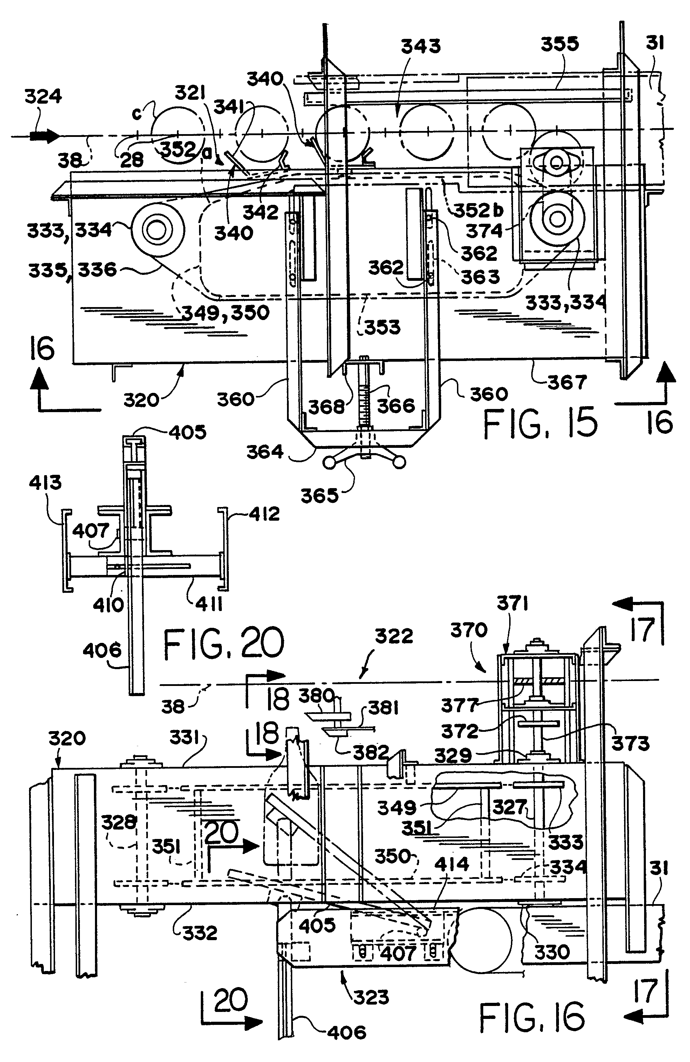

Simultaneous and uniform adjustment of the jacks 279 is easily accomplished by turning an adjustment crank wheel 287 located outwardly of an angled corner of the bottom plate 152 at an accessible location, as seen in Figs. 12-14. The crank wheel 287 is keyed to a shaft 288 on which a drive sprocket 289 is keyed. The drive sprocket 289 is at the same elevation as the jack sprockets 283 and a pair of idler sprockets 290. Trained over the jack sprockets 283, drive sprocket 289 and idler sprockets 290 is a chain 291. Accordingly, rotation of the crank wheel 287 will simultaneously and uniformly adjust jacks in order to maintain the lift cam horizontal while vertically positioning the lift cam at a required height for a given size container. As seen in Fig. 14, an adjustment jack mechanism 292 may be provided to remove slack in the chain 291.

Looking at Figs. 12 and 13, the dwell cam 276 can be seen to have a horizontal, annular top surface 295 on which the dwell cam roller 266 rides. In contrast, the lift cam 277, on which the lift cam roller 265 rides, has an annular top surface including a lower horizontal portion 296, a gradually rising helical portion 297 and a sharply downwardly sloping portion 298 forming a transition from the upper trailing end 299 of the helical portion 297 to the leading end of the lower horizontal portion 296, movement of the roller 265 along the lift cam 277 being in a counterclockwise direction in Fig. 12. As seen in Fig. 13, the trailing end of the helical portion 297 rises above the top surface 295 of the dwell cam 276 and the amount of such projection above the dwell cam can be adjusted by the lift cam adjustment mechanism 280.

During rotation of the loading carrousel 176, each pedestal 230, 231 as it travels through the transfer zone 227 will be supported by the dwell cam roller 266 riding on the dwell cam 276. The dwell cam is fixed at the proper height for allowing the pedestal plate 233, 234 to pass slightly beneath the rotating dead plate 209 with minimal step down from the rotating dead plate to the pedestal plate. This step down also is reduced by using a rotating dead plate which is thin at least at its peripheral shelf portion, but sufficiently thick to provide adequate support for containers carried thereon.

After each pedestal 230, 231 leaves the transfer zone 227, it will continue to ride on the dwell cam 276 by means of the dwell cam roller 266 until the lift cam roller 265 commences riding on the portion of the lift cam 277 rising above the dwell cam. When this occurs will depend on the vertical height setting of the lift cam, the higher the setting the sooner the pedestal will begin to rise. As the lift cam roller rides up the helical surface 297 of the lift cam, the pedestal will rise and move a container thereon upwardly to engagement with a container holding device 26 moving at the same speed and centered above the container which is held in proper position on the pedestal by the V-block 250 and containment rail 260.

Initially, the top of the container will be lower than the lower end of the container holding device 26 which, in the illustrated embodiment, wold be the tip of the electrostatic probe extension 74, thereby to allow the container and the holding device to align vertically with respect to one another. Then, as the pedestal 230 is raised by the lift cam 277, the container will be raised and telescoped over the probe extension and then the collet 76 of chuck 59 (Fig. 10). Further raising of the container will push the chuck upwardly which causes the collet to expand and grip the container. Preferably the vertical height of the lift cam is adjusted so that as the lift cam roller 265 reaches the uppermost point 299 of the helical portion 297 of the lift cam, the bottle will have pushed the chuck to its uppermost position against the stop 116. It perhaps should here be noted that the container holding device is held against vertical upward movement during upward pushing of the chuck by the main shaft sprocket 175 engaging the chain 38. If desired, there may be provided a backstop above the sprocket 175 upon which the carrier rollers 47 could bear to prevent upward movement of the holding device and/or to reduce the upward force acting on the sprocket 175.

With the chuck 59 pushed up against the stop 116, the container will be firmly gripped and held by the container holding device 26 as aforedescribed. This occurs at a point a short distance before the carrier chain 38 passes from the main shaft sprocket 175 to the output shaft sprocket 195 (Fig. 8). This point corresponds to the trailing end 299 of the lift cam's helical surface. After this point, the lift cam roller 265 will rapidly descend along the steep transition surface portion 298 of the lift cam thereby rapidly allowing the pedestal 230 to drop by gravity and clear the V-block 250 thereon from the container before the container moves tangentially away from the loading carrousel along the transition flight 303 (Fig. 8) of the conveyor chain 38. The pedestal will drop until the dwell cam roller 266 again rides on the dwell cam 276 which positions the pedestal for passage beneath the rotating dead plate 209.

Although the preceding description of the operation of the cam mechanism 264 was made primarily with reference to a single pedestal 230, it should be understood that each pedestal 230, 231 is sequentially and cyclically raised and lowered by the cam mechanism in the above manner as the pedestals are moved around the axis of the main shaft 172.

As above indicated, the pedestals 230, 231 and consequently the V-blocks 250 thereon, after leaving the transition zone 227, travel initially horizontally and then helically upward. In order to maintain the containers seated in the notches 252 of the V-blocks 250, the containment rail 260 is adjusted to follow such path. The containment rail is mounted to the columns 154-158 for radial adjustment to accommodate different diameters of containers and for vertical adjustment to accommodate different vertical height settings of the lift cam 277.

In general, the container loading mechanism 24 can be adjusted to allow the transfer of containers of various diameters and heights. This is enabled by the adjustable V-blocks 215 and 250 and the adjustable cam mechanism 264. For a given size of container, the V-blocks 250 are adjusted radially with respect to the main shaft 172 to place the centers of the containers seated in the notches 252 thereof vertically in line with the centers of respective container holding devices 26 carried by the conveyor chain 38 trained over the main shaft sprocket 175. The containment rail 260 also is adjusted radially with respect to the main shaft to ensure seating of the containers in the notches 252 of V-blocks 250. The V-blocks 215 are adjusted radially with respect to the input shaft 178 to obtain precise positioning of containers in the transfer zone between opposed V-blocks 215 and 250 of the input and loading carrousels as best seen in Fig. 11. The containment rail 225 then may be adjusted radially with respect to the input shaft to ensure seating of the containers in the notches 217 of the V-blocks 215. As seen in Fig. 8, the containment rail 225 is mounted to the post 153 for radial adjustment by brackets 306.

In this manner a range of different diameters of containers can be handled. In Fig. 11, the V-blocks 215 and 250 are shown adjusted to accommodate about the largest diameter container within the range of adjustment permitted by radial adjustment of the V-blocks 215 and 250. However, the illustrated preferred embodiment may be used to transfer a range of larger diameter containers. This is obtained by replacing the V-blocks 215 with another set of V-blocks 308 illustrated in phantom lines in Fig. 11 and replacing the V-blocks 250 with V-blocks 312 on the wider pedestals only as shown in phantom lines in Fig. 11. The V-blocks 308 are shorter than the V-blocks 215 and have a wider V-shape notch 309 which may be truncated at its vertex as shown.

When used to transfer larger diameter containers, the V-blocks 308 are mounted at every other one of the radial slots 220. Accordingly, there are half as many V-blocks 308 than V-blocks 215. During timed rotation of the input and loading carrousels, the V-blocks 308 will oppose the wider pedestals 231 in the transfer zone 227, the wider pedestals 231 being provided with V-blocks 312 having V-shape notches 313 which are wider than the notches 252 of the V-blocks 250. The notches 313 may be truncated at the vertex as shown.

The loading carrousel will have V-blocks 250 on both the large and small pedestals when V-block 215 is used on the input carrousel. When large containers are being run the input carrousel will have the V-block 308 installed at every other radial slot 220 but so as to be opposite the large pedestals on the loading carrousel. All the V-blocks 250 will be removed and the V-blocks 312 installed on only the large pedestals. The small pedestals will not have a V-block on them when large containers are being run. Accordingly, the wider pedestals 231 are always in use. However, the smaller pedestals 230 will not be in use when larger containers are being run. As indicated, when large containers are being loaded and only the large pedestals will have containers on them, the small pedestals will still rise and fall as they follow the circular cam.

Because the V-blocks 308 are angularly spaced apart by 72°, they will oppose in the transfer zone 227 every other one of the V-blocks 312 of the loading carrousel. Consequently, the containers otherwise transferred in the above described manner will be loaded onto every other container holding device 26 carried by the conveyor chain 38. As a result, the same carrier conveyor 25 may be used when transferring larger diameter containers which are too large to be loaded onto every container holding device. That is, the spacing of the container holding devices, which is desirable for the range of smaller diameter containers, is less than or too close to the diameter of containers in the range of larger diameter containers that can be transferred by using the V-blocks 308 in conjunction with the V-blocks 312.

As will be appreciated, the loading mechanism 24 can be converted between size ranges by replacing one set of V-blocks with another set of V-blocks.

In addition to allowing the transfer of various sizes and heights of containers, the adjustable cam mechanism 264 and the adjustable V-blocks also allow transfer of containers of various cross-sectional sizes and shapes through modification that will be apparent to those of ordinary skill in the art, although in some cases preliminary orienting of containers having other than circular cross-sections may be needed to ensure centering of the containers to the container holding devices of the carrier conveyor.

### The Container Unloading Mechanism

Referring now to Figs. 15-17, the container unloading mechanism 30 generally comprises a fabricated frame 320, a container nest assembly 321, an unloader cam assembly 322 and a container ramp assembly 323. As discussed further below, the container unloading mechanism is driven by the conveyor chain 38 thereby to assure proper timing and controlled position unloading of containers from the container holding devices 28 onto take-away conveyor 31. In Fig. 15, the centers of the holding devices are indicated by tick marks and it can be seen that relatively large diameter containers are carried on every other container holding device. However, it will be appreciated that the unloader mechanism is operable to unload containers carried on every container holding device. It also can be seen that the conveyor chain 38, and consequently the containers carried thereby, travel along a straight path through the unloading mechanism indicated by arrow 324, although modification could be made to accommodate a curved path if needed.

The container nest assembly 321, which is offset to one side of the conveyor path 324, comprises a pair of vertical shafts 327 and 328 each journaled by respective upper and lower bearings 329 and 330 between top and bottom horizontal plates 331 and 332 of the frame 320. The shafts are spaced apart in a direction parallel to the conveyor path and each shaft has mounted thereto upper and lower sprockets 333 and 334 which are vertically spaced apart at the same heights as respective sprockets on the other shaft. The upper and lower sprockets have trained thereover upper and lower chains 335 and 336.

The upper and lower chains 335 and 336 carry a plurality of container nests 340 which are equally spaced apart along the endless length of the chains, although only two nests are shown in Fig. 15. Each container nest includes a pair of vertical members 341 and 342 joined together to form a generally U-shape channel. Both members 341 and 342 may be formed from thin sheet stock. The member 341 is bent along a vertical fold line to form the base and one leg of the U-shape channel, whereas the member 342 is attached to the base and forms the other leg of the U-shape channel. Preferably, the distal edge portions of the two legs flare in a direction away from one another with both angled to the conveyor path when the nest moves parallel to the conveyor path. As is also preferred, the members 341 and 342 are joined together for adjustment of the legs thereof toward and away from each other to accommodate different sizes and shapes of containers. As discussed further below, containers being unloaded from the carrier conveyor are captured in the nests as they move through an unloading zone 343 and the containers are held upright by the nests during removal from the holding devices and their descent onto the take-away conveyor 31.

For easy and quick attachment of the container nests 340 to the chains 335 and 336, each container nest has upper and lower pin blocks 345 secured to the back side of its base at the same vertical spacing as the upper and lower chains 335 and 336. Depending from each pin block is a pin 346, and the upper and lower chains 335 and 336 have vertically aligned holes for receiving the pins 346 thereby to hold the container nest to the chains for movement therewith. As will be appreciated, each container nest can be easily and quickly mounted on the chains without the use of any tools by aligning the pins above the holes in the chains and then lowering the nest while inserting the pins into the holes. The nest is lowered until the pin blocks rest atop the chains. This permits quick and easy replacement of different sizes of nests for different size ranges of containers.

Along their flights extending between the sprockets on shafts 327 and 328, the upper and lower chains 335 and 336 are guided and supported by upper and lower chain guide plates 349 and 350, respectively. The guide plates, which are interconnected by spacers 351, each has an inner edge 352 guiding and backing the forward flight of the respective chain and outer edge 353 guiding the return flight of the chain. Both edges 352 and 353 of each plate 349, 350 preferably are provided with bearing material to resist wear and reduce resistance to sliding of the chain.

Each chain guide plate 349, 350 is generally rectangular although the inner edge 352 preferably has a leading portion 352a sloped to the path 324 of the carrier chain 38 and a trailing portion 352b extending parallel to the chain path coextensively with the unloading zone 343. The angled leading portion 352a guides the container nests inwardly or laterally towards the containers carried by the conveyor chain for capture of respective containers in the U-shape channels of the nests. In the unloading zone, the trailing portion 352b of the inner edge guides the nests parallel to the chain path while a containment plate 355 holds the containers seated in the nests.

In order to accommodate different sizes and shapes of containers, the containment rail 355 is mounted for adjustment toward and away from the conveyor path 324 by brackets 356. The brackets 356 are attached to vertical uprights 357 in the frame 320.

The chain guide or backing plates 349 and 350 also are mounted for adjustment toward and away from the conveyor path 324. The guide plates are attached to upper and lower rails 360 and 361 by pins 362 extending through slots 363 elongated in a direction perpendicular to the conveyor path 324. There are two upper rails 360 which are parallel and slide atop the top plate 331. Simialrly, there are two parallel lower rails 361. Attached to the outer ends of the rails is a cross member 364 in which a double arm crank 365 is journaled. The crank 365 is threaded on the outer end of a screw 366 which is fastened at its inner end to an outer side plate 367 of the frame 320 at a bracing channel 368. By rotating the crank the guide plates are adjusted inwardly or outwardly. Consequently, the forward flight of the chains and the container nests carried thereon will be adjusted laterally inwardly and outwardly with respect to the conveyor chain path 324.

The container nests 340 are advanced by the chains 335 and 336 in timed relationship with the conveyor chain 38 by a drive train assembly 370 mounted in a superstructure 371 atop the top plate 331. The drive train assembly 370 includes a sprocket 372 mounted to a vertical extension 373 of the shaft 327. Sprocket 372 is of phase adjusting type to enable precise alignment of the nests with the main conveyor chain. A chain 374 is trained around the sprocket 372 and another sprocket 375 mounted to a short shaft 376 laterally offset from the shaft extension 373. The short shaft 376 has mounted thereto a larger sprocket 377 in mesh with the conveyor chain 38. Accordingly, the conveyor chain synchronously drives the drive train assembly which in turn synchronously drives the chains carrying the container nests. Through the unloading zone 343 the container holding devices and container nests move at the same speed.

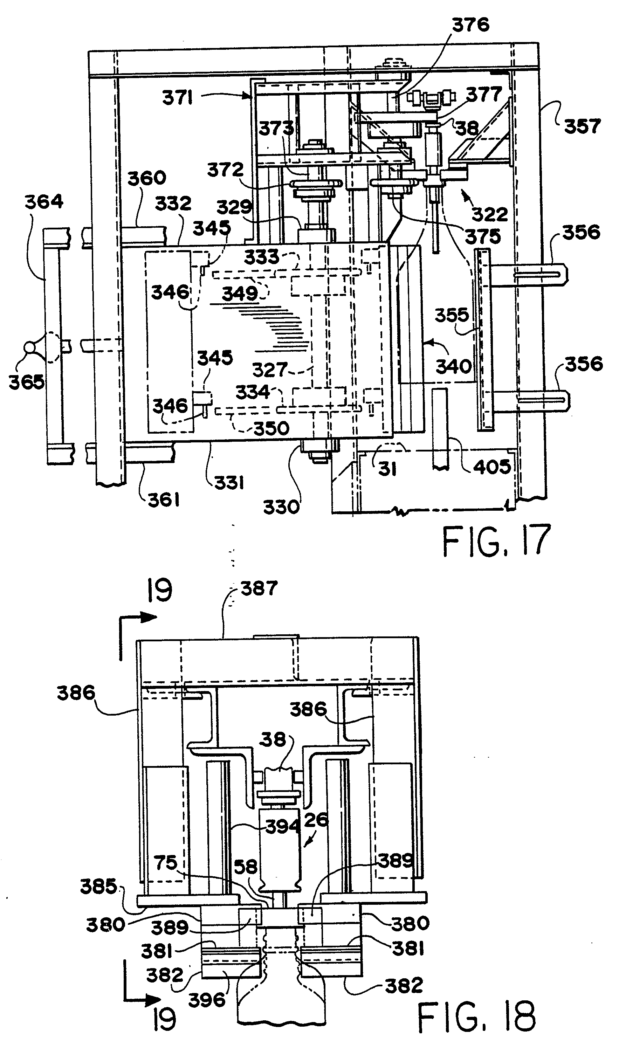

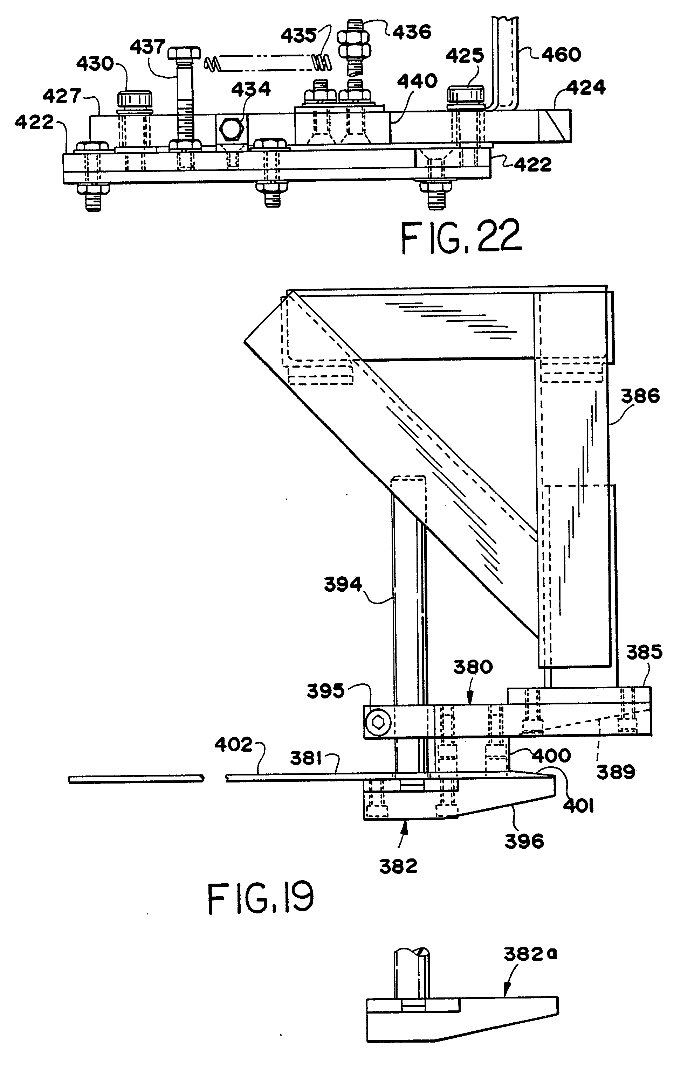

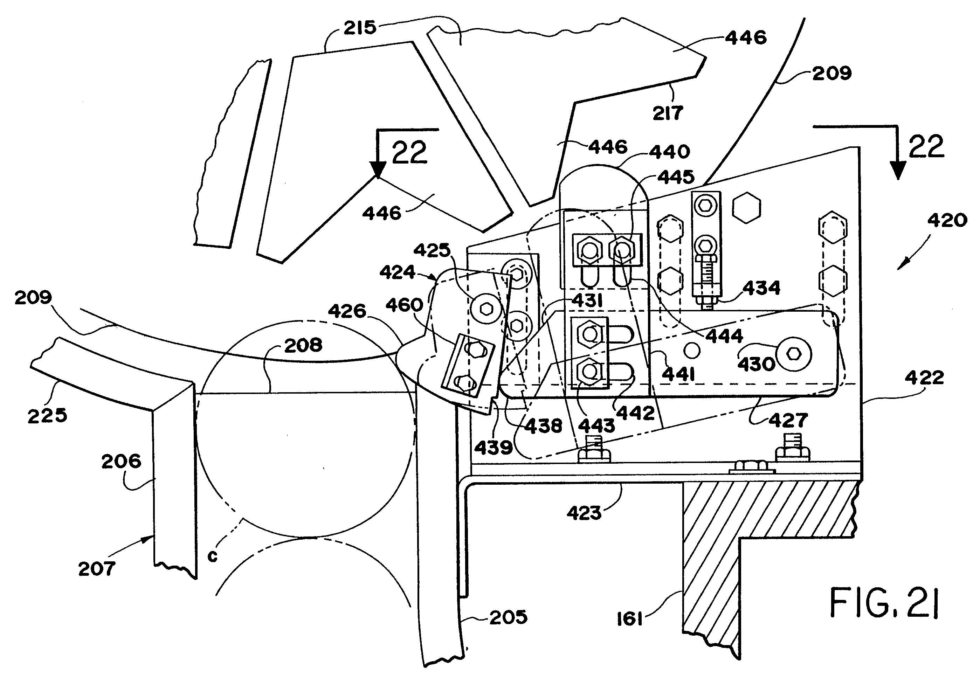

At the leading end of the unloading zone 343, the unloading cam assembly 322 is mounted within the frame 320. The cam assembly 322 comprises two sets of cams which are symmetrical with respect to the conveyor chain path 324. Each cam set includes a chuck release cam 380, a chuck retainer cam 381 and a bottle cam 382. The approximate positions of the cams relative to the length of the unloading mechanism are illustrated in Fig. 16, and the cams and their supporting structure are shown in greater detail in Figs. 18 and 19.

As seen in Figs. 18 and 19, the release cams 380 are located on opposite sides of the conveyor path. Each cam is secured to the underside of a respective plate 385 which extends inwardly from the bottom of a respective frame leg 386. Each frame leg is attached to a respective end of a cross frame member 387 which extends atop the track frame assembly of the carrier conveyor.

The release cams 380 located on opposite sides of the conveyor path are positioned to engage at a sloping cam surface 389 thereof the top surface of the chuck 59 of a container holding device 26 as such device is moved by the release cams. The sloped cam surfaces 389 of the release cams is of sufficient height and length to urge the chuck downwardly along the spindle 58 to collapse the collet portion of the chuck 59 and release a container.

Upon urging of the chuck 59 to its release position, the container normally drops by its own weight from the collet. However, should the container remain on the collet because of residual engagement of the collet with the interior surface of the container which may be irregular, the bottle cams 382 are provided to ensure removal of the container from the chuck.

Each bottle cam 382 is attached to the lower end of a vertical bar 394 which extends throgh a hole in the trailing end of the respective release cam 380. The trailing end of the release cam is split and a fastener 395 is provided to clamp the split end around the vertical bar to hold the vertical bar in adjusted position. Each bottle cam is vertically adjusted so that the sloping cam surface thereof 396 is positioned to engage a shoulder surface of the container, a bottle being illustrated, thereby to urge the bottle downwardly and off of the chuck should the bottle remain hung up on the chuck. A lowered position of the bottle cam is seen at 382a in Fig. 19.

In order to ensure that the hung-up bottle does not pull the chuck 59 off of the spindle 58, the chuck retainer cams 381 are provided to limit downward vertical movement of the chuck along the spindle. The chuck retainer cams are mounted beneath the respective release cams 380 by spacer blocks 400. The chuck retainer cams are rearwardly offset with respect to the cam surface 389 of the release cams and each has a slightly upwardly sloping lead-in surface 401 terminating at a horizontal retaining surface 402. The sloping lead-in surface 401 is coextensive with a trailing end portion of the sloping cam surface 389 of the respective release cam, and the horizontal retaining surface 402 is spaced from the underside of the release cam by a distance greater than that of the height of the chuck's head 75 to permit passage of such head 75 between the chuck retainer cam and release cam. Preferably the forward end of the release cam is vertically aligned with the forward end of the bottle cam or located forwardly of the bottle cam to ensure that the retainer cam will underlie the chuck's head 75 before the bottle cam engages the container and urges it downwardly.

In the foregoing manner, containers are released from the container holding devices 26 from which the containers drop downwardly. As the containers move downwardly, the container nests 341 and containment plate 355 cooperate to maintain the containers' vertical orientation.

Downward movement of the containers through the channels of the container nests 341 is controlled by the ramp assembly 323. As seen in Figs. 16 and 20, the ramp assembly comprises a narrow ramp 405 pivotally attached at its upper end to a vertical adjustment rail 406. The trailing end of the ramp rests atop a support bar 407 which permits upward and downward pivoting-like movement of the ramp generally about the horizontal axis of the support bar 407.

The vertical adjustment rail 406 is mounted for vertical and transverse horizontal adjustment by bracket 410 to transverse frame member 411 extending between side rails 412 and 413 of conveyor 31. Preferably, the ramp 405 is adjusted so that its leading end is positioned just beneath the bottoms of the containers as they move into the unloading zone 343. Then, as the containers drop from the container holding devices, the bottoms thereof will engage the ramp. As the containers are advanced forwardly by the container nests, the containers will slide down the ramp and onto a horizontal dead plate 414 and then onto the take-away conveyor 31. After each container nest has moved a container onto the take-away conveyor, the container nest is moved laterally away from the conveyor path to clear the container which then is advanced forwardly by the take-away conveyor.

In addition to being vertically adjustable as above described, the ramp may also be adjusted laterally. The rail preferably is positioned near the centers of the containers but offset laterally from the container nests to permit passage of such container nests through the unloading zone.

## Bottle Stop and Timing Mechanism

Referring now to Figs. 21-24, the above described container loading mechanism may be provided with a bottle stop and timing mechanism generally indicated at 420. The bottle stop and timing mechanism is conveniently mounted to the upright 161 at the exit of the bottle chute 207. The bottle stop and timing mechanism releases a container C onto the rotating dead plate 209 at the proper time. Also, the mechanism disables feeding of containers onto the rotating dead plate should the bottles on the single file conveyor be less than the minimum supply needed to maintain the desired feed pressure for smooth loading of containers onto the rotating dead plate.

The bottle stop and timing mechanism 420 comprises a base plate 422 adjustably mounted by bracket 423 to the upright 161. A stopper arm 424 is pivotally mounted atop the base plate by a pivot fastener 425. The stopper arm pivots in a horizontal plane and has at its edge nearest the chute a rounded protrusion 426. The protrusion 426 is movable into and out of the path of the containers between the illustrated solid and broken line positions by a control lever arm 427.

The control arm 427 is mounted to the base plate 422 by a pivot fastener 430 for pivotal movement in the horizontal plane of the stop arm. The end of the control arm remote from the pivot is provided with a cam surface 431 extending from one side edge of the lever arm at an angle to the center line of the arm to a rounded nose adjacent the other side edge of the lever arm. The back side of the stopper arm 424 normally is urged against the cam surface 431 of the control arm by the forwardmost container in the chute 207 which is urged against the stopper arm by line pressure.

control arm 427 is normally biased against an adjustable stop 434 to its solid line position in Fig. 21 by a spring 435. As seen in Fig. 22, the spring 435 is connected between a post 436 on the lever arm and a post 437 fixed to the base plate 422. When in its solid line position, the control arm holds the stopper arm in its protruding position seen in solid lines in Fig. 21. When in this position, the rounded protrusion 426 on the stopper arm is positioned to preclude passage of a container out of the chute 207 and onto the rotating dead plate 209. However, when the control arm moves to its phantom line position in Fig. 21, line pressure acting on the leading container in the chute will cause the stopper arm to swing outwardly to permit passage of the container onto the rotating dead plate. Preferably the stop 434 is adjusted to stop the control arm 427 at a position locating the nose 438 of the control arm in the notch 439 on the back side of the stopper arm. At such position the bottom surface of the notch 439 will be aligned more perpendicularly to the control arm for better locking. Also, it is preferred that the stopper arm be set to protrude just enough to catch the container while requiring only minimal movement to release the container.

Movement of the control arm 427 against the spring biasing force from its solid line to its phantom line positions in Fig. 21 is effected and controlled by a timing cam 440 in cooperation with the V-blocks 215 mounted on the rotating dead plate 209. The timing cam preferably is made of suitable bearing material and is attached to a cam arm 441 extending perpendicularly to the control arm. The cam arm is adjustable radially with respect to the pivot axis of the control arm by means of slots 442 through which fasteners 443 extend and the timing cam is adjustable toward and away from the control arm by elongated slots 444 and 445 and fasteners. The timing cam is adjusted to extend into the path of the star-like spines 446 of the V-blocks. The spines of the V-blocks, between which the recesses 217 are formed, engage the timing cam to urge the control arm to its phantom line position to permit release of a container at the proper time for smooth transfer onto the rotating dead plate and reception in the V-block.

As will be appreciated, the V-block 215 in which the next container is to be received on the rotating dead plate 209 is the V-block which activates the timing cam 440. The trailing spine 446 of the V-block engages the timing cam and pushes the timing cam outwardly. As the timing cam is pushed outwardly, it will cause the control arm 427 to swing to its phantom line position which allows the stopper arm 424 to be pivoted inwardly to clear the container at the end of the chute 207. After the stopper arm has been pivoted inwardly, conveyor line pressure will move the container in the chute onto the rotating dead plate 209 for capture within the notch 217 of the V-block. At this time the trailing spine of the V-block and the leading spine of the next V-block will have cleared the timing cam whereupon the control arm is free to pivot back to its solid line position in Fig. 21. This, however, initially will be prevented by the container blocking return of the stopper arm to its solid line position in Fig. 21. After the container has been moved away from the stopper arm, the stopper arm then pivots back to its protruding position in order to stop loading of the next container onto the rotating dead plate until such time that the timing cam is again activated in the above described manner. As the stopper arm moves to its protruding position, the spring 435 pivots the control arm back to its solid line position in Fig. 21 to hold the stopper arm in its container blocking position. In this manner, the containers are sequentially fed one at a time onto the rotating dead plate at the proper time. This prevents container jams and breakage at the entry station of the input carrousel.

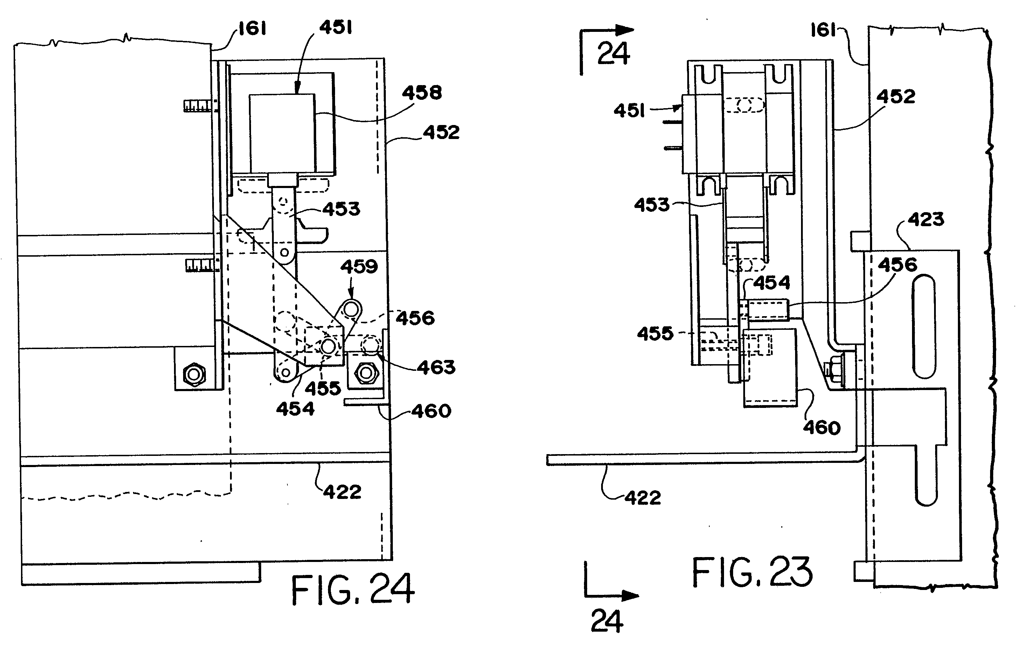

As seen in Figs. 23 and 24, the bottle stop and timing mechanism 420 also includes a container feed disabling mechanism 450. The disabling mechanism includes an electric solenoid 451 mounted to a bracket 452 secured to mounting plate 423. The solenoid has a vertical armature 453 pivotally connected at its lower end to one end of a lever arm 454. The lever arm 454 is pivotally mounted at 455 to the bracket 452 for swinging movement in a vertical plane. At its end opposite its end connected to the solenoid armature, the lever arm has a catch 456.

When the solenoid armature 453 is extended from the solenoid housing 458, the lever arm 454 will be swung to its position indicated at 459. In this position, the catch 456 is clear of a stop bracket 460 attached to and extending upwardly from the stopper arm 424. That is, the catch 456 does not interfere with the stop bracket on the stopper arm thereby allowing normal operation of the stopper arm in the above described manner. However, upon retraction of the solenoid armature 453 into the solenoid housing 458, the lever arm 454 is swung to its position indicated at 463 in Fig. 24. In this position, the catch 456 moves behind the stop bracket to hold the stopper arm in its protruding position notwithstanding actuation of the control arm 427 by the rotating V-blocks 215. Consequently, feeding of containers onto the rotating dead plate 209 will stop.

The solenoid 451 is controlled by a sensing device 465 (Fig. 1) mounted on the single file conveyors 22, 23 upstream from the stopper arm 426. When containers are not present at the sensing device 465, the sensing device activates the electric solenoid to stop the flow of containers onto the rotating dead plate 209. This maintains a minimum supply of bottles on the single file conveyors at all times in order to maintain the required feed pressure for smooth loading of containers onto the rotating dead plate. The sensing device, for example, may be a photoelectric sensor which activates the electric solenoid when no container is present to block a beam of light extending across the path of containers.

In the foregoing manner, the electric solenoid and timing cam work together to ensure that the stopper arm releases a container for loading at the proper time and at the proper line pressure for smooth bottle transfer onto the rotating dead plate.

Alternatively, a timing screw feed mechanism of conventional type may be employed in place of the bottle stop and timing mechanism.

Although the invention has been shown and described with respect to a preferred embodiment, those skilled in the art will appreciate that various alterations and modifications can be made without departing from the scope or spirit of the invention defined in the following claims.

## Claims

1. A container loading mechanism for transferring containers from a conveyor (21, 22, 23) of mass transport type onto container holding devices (26) carried on an overhead conveyor (25), comprising

first rotating means (210) for receiving containers from the mass transport conveyor at a first location (226) and for rotatably carrying the containers to a second location (227), said first rotating means including first positioning means (215) for circumferentially equally spacing the containers carried on said first rotating means,

second rotating means (176) for receiving containers from said first rotating means (210) at said second location (227) and for rotatably carrying the containers (C) away from said second location along an arcuate path, said second rotating means including second positioning means (250) for circumferentially equally spacing the containers carried on said second rotating means,

means (175) for directing the container holding devices of the overhead conveyor above and coextensively with a portion of said arcuate path, and

means (264) for progressively raising the containers carried on said second rotating means during travel of the containers through said portion of said arcuate path for loading of the containers onto container holding devices (26) of the overhead conveyor (25).

2. A container holding device for gripping and holding open-ended containers at the interior surface of the container, comprising a plurality of jaws (77) arranged around an axis of the container holder device for radial expansion and contraction, control means (73) movable axially with respect to said jaws for controlling radial expansion and contraction of said jaws, and resilient friction means (97) supported by said jaws and urgeable radially outwardly by said jaws for resiliently applying gripping force and friction holding force to the interior surface of a container telescoped over said jaws.

3. A container unloading mechanism for transferring containers from container holding devices (26) of an overhead conveyor (25) onto a take-away conveyor (31, 32), the holding devices being of a type including a support (72) and relatively movable activating member (75) for releasing a container from the device, comprising

means (340, 355) for guiding the container holding devices along a path, and

cam means (322) in the path of the holding devices (26) for moving the activating member relative to the support of each holding device as the devices sequentially are moved to engagement therewith by the conveyor.

4. A container transfer system comprising container holding devices (26) carried on an overhead conveyor (25), a container loading mechanism (24) for transferring containers from a conveyor (21, 22, 23) of mass transport type onto said container holding devices, and a container unloading mechanism (30) for transferring containers from said holding devices onto a take away conveyor (31, 32),

said container holding devices each comprising a plurality of jaws (77) arranged arund an axis of the container holder device for radial expansion and contraction, control means (73) movable axially with respect to said jaws for controlling radial expansion and contraction of said jaws, and resilient friction means (97) supported by said jaws and urgeable radially outwardly by said jaws for resiliently applying gripping force and friction holding force to the interior surface of a container telescoped over said jaws,

said loading mechanism comprising first rotating means (210) for receiving containers from the mass transport conveyor at a first location (226) and for rotatably carrying the containers to a second location (227), said first rotating means including first positioning means (215) for circumferentially equally spacing the containers carried on said first rotating means, second rotating means (176) for receiving containers from said first rotating means (210) at said second location (227) and for rotatably carrying the containers (C) away from said second location along an arcuate path, said second rotating means including second positioning means (250) for circumferentially equally spacing the containers carried on said second rotating means, means (175) for directing the container holding devices of the overhead conveyor above and coextensively with a portion of said arcuate path, and means (264) for progressively raising the containers carried on said second rotating means during travel of the containers through said portion of said arcuate path for loading of the containers onto container holding devices (26) of the overhead conveyor (25), and

said unloading mechanism comprising means (340, 355) for guiding the container holding devices along a path, and cam means (322) in the path of the holding devices (26) for moving the activating member relative to the support of each holding devices as the devices sequentially are moved to engagement therewith by the conveyor.

5. A loading mechanism or system as set forth in claim 1 or 4, wherein said first rotating means (210) includes rotating plate means (209) for supporting containers thereon, and said first positioning means (215) includes means (215) forming a circumferential arrangement of radially outwardly opening recesses (217) for receiving and positioning containers. and including containment means (225) for retaining containers nested in said recesses during transfer from said first location to said second location.

6. A loading mechanism or system as set forth in claim 5 wherein said means (215) forming a circumferential arrangement includes a plurality of positioning members (215) mounted to said rotating plate means and each including a respective one of said recesses (217) and said positioning members (215) are radially adjustable with respect to the rotational axis of said rotating plate means (209).

7. A loading mechanism or system as set forth in claim 1, 4, 5 or 6, wherein said second rotating means (176) includes a plurality of shelf means (230) for supporting containers (C) thereon, said plurality of shelf means being circumferentially arranged around the rotational axis (172a) of said second rotating means and guided for movement parallel to said axis, and said second positioning means (250) including positioning members (250) on each shelf means having a radially outwardly opening recess for receiving and positioning a container supported on said shelf means.

8. A loading mechanism or system as set forth in claim 7, wherein said means (264) for progressively raising includes circular cam means (276, 277) for controlling movement of said shelf means parallel to said axis, and said circular cam means includes a dwell cam (276), a lift cam (277), and means (280) for adjusting said lift cam relative to said dwell cam in a direction parallel to said axis.

9. A container transfer system comprising the container unloading mechanism of claim 3 or 4, and the overhead conveyor including the holding devices, the holding devices each comprising a shaft, a chuck mounted for telescoping movement on said shaft, said chuck including a plurality of jaws arranged around said shaft for radial expansion and contraction, and cam means on said shaft for controlling radial expansion and contraction of said jaws during telescoping movement of said chuck on said shaft, and said chuck having abutment means engageable by said unloader cam means to effect actuation of said jaws for releasing a container therefrom.

10. A device or system as set forth in claim 2, 4 or 9, wherein said resilient means (97) includes at least one annular resilient member (97) circumscribing said jaws, and said jaws have recesses (88) in their radially outer surfaces for retaining said one annular resilient member.

11. A device or system as set forth in claim 2, 4, 9 or 10, comprising an elongate member (58) and a chuck (59) mounted on said elongate member for telescoping axial movement, said chuck including said jaws, said jaws being arranged around said elongate member for radial expansion and contraction, said control means including cam means (73) on said elongate member for controlling radial expansion and contraction of said jaws during telescoping movement of said chuck on said shaft, said chuck including a body (75) slidable on said elongate member, said jaws including respective resilient fingers (77) extending axially from said body in cantilever-like fashion, and said body having abutment means (112) engageable by a container telescoped over said elongate member and movable by the container along said elongate member to effect actuation of said jaws for gripping the container.

12. A device or system as set forth in claim 11, wherein said shaft has a radially enlarged retention stop means (114) thereon for normally retaining said chuck on said shaft, said chuck being radially expandable to permit passage thereof over said retention means for removal of said chuck from said shaft, and said chuck being removable from said shaft by hand without tools; and including extension means (74) on said shaft for extending into the interior of a container gripped by said jaws, and means (124) for electrically connecting said extension means to a source of electrical potential outside the container.

13. A carrier conveyor for containers comprising a chain (38), a plurality of attachment pins (55) extending transversely to the length of said chain, a spindle housing (56) mounted for rotation on said attachment pin, a spindle (58) attached to said housing, and a chuck (59) mounted for telescoping movement on said spindle.

14. A method of using a container holding device as set forth in claim 2 with different sizes of containers comprising the steps of using the device with one size of friction means (97) for a first size of containers and then replacing the friction means (97) of such one size with friction means of a different size for use of the device with a different size of containers.

FIG. 1

FIG. 4

FIG. 3

FIG. 2

FIG. 7

FIG. 6

FIG. 5

FIG. 8

FIG. 9

FIG. 10

FIG. 11

FIG. 12

FIG. 14

FIG. 13

FIG. 15

FIG. 20

FIG. 16

FIG. 17

FIG. 18

**FIG. 22**

**FIG. 19**

382a

FIG. 21

FIG.23

FIG.24

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 505 346 (SAINT-GOBAIN EMBALLAGE) * Page 4, line 24 - page 5, line 11; page 6, line 8 - page 7, line 1; figures * | 1,4 | B 65 G 47/84 |
| A |  | 2,3,5,7 ,13 |  |
| A | FR-A-2 241 476 (CONTINENTAL CAN CO., INC) * Page 4, lines 18-27 * | 1,4,5,7 |  |
| A | AU-B- 15 866 (SUN CHEMICAL CORP.)(1976) * Page 5, line 25 - page 6, line 6; figure 1 * | 1 |  |
| A | PATENT ABSTRACTS OF JAPAN, vol. 9, no. 11 (M-351)[1734], 18th January 1985; & JP-A-59 158 741 (MURATA KIKAI K.K.) 08-09-1984 | 2,9,10, 11 |  |
| A | DE-A-3 127 209 (FRIED. KRUPP GmbH) * Page 13, line 24 - page 14, line 4; figures * | 2,9,10, 11 | TECHNICAL FIELDS SEARCHED (Int. Cl.4) B 65 G B 67 C |

The present search report has been drawn up for all claims

| Place of search | Date of completion of the search | Examiner |
|---|---|---|
| THE HAGUE | 04-10-1988 | VAN ROLLEGHEM F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document